# EUROPÄISCHE PATENTSCHRIFT

(11) **EP 1 100 705 B1**
(45) Veröffentlichungstag und Bekanntmachung des Hinweises auf die Patenterteilung: **03.09.2003**
(21) Anmeldenummer: 99934640.6
(22) Anmeldetag: 08.07.1999
(51) Int. Cl.: B60T 13/72, B60T 13/57, B60T 13/52, B60T 7/12

(54) **UNTERDRUCKBREMSKRAFTVERSTÄRKER MIT MECHANISCHER NOTBREMSHILFE**
VACUUM BRAKE BOOSTER WITH MECHANICAL EMERGENCY BRAKE APPLICATION ASSISTANCE
SERVOFREIN A DEPRESSION AVEC ASSISTANCE MECANIQUE AU FREINAGE D'URGENCE

(30) Priorität: 05.08.1998 DE 19835409; 28.10.1998 DE 29819224 U; 05.03.1999 DE 29904055 U
(43) Veröffentlichungstag der Anmeldung: 23.05.2001
(73) Patentinhaber: LUCAS INDUSTRIES PUBLIC LIMITED COMPANY, Solihull B90 4LA (GB)
(72) Erfinder: SCHLÜTER, Peter, D-56206 Kammerforst (DE)
(74) Vertreter: Beyer, Andreas, Dr.
(86) Internationale Anmeldenummer: EP9904822
(87) Internationale Veröffentlichungsnummer: WO00007862

(56) Entgegenhaltungen:
- US-A- 5 779 329
- PATENT ABSTRACTS OF JAPAN vol. 1997, no. 11, 28. November 1997 (1997-11-28) & JP 09 175373 A (JIDOSHA KIKI CO LTD), 8. Juli 1997 (1997-07-08)

## Beschreibung

Die Erfindung betrifft Unterdruckbremskraftverstärker mit einer Unterdruckkammer und einer davon durch eine bewegliche Wand druckdicht getrennten Arbeitskammer sowie einem Steuerventil, das ein mit der beweglichen Wand kraftübertragend gekoppeltes Gehäuse und einen darin angeordneten ersten Ventilsitz aufweist, der zur Erzielung einer Druckdifferenz an der beweglichen Wand die Zufuhr von zumindest Atmosphärendruck zur Arbeitskammer in Abhängigkeit der Verschiebung eines mit dem ersten Ventilsitz gekoppelten Eingangsgliedes des Bremskraftverstärkers zu steuern vermag. Unterdruckbremskraftverstärker dieser Art sind seit langem bekannt und befinden sich millionenfach im Einsatz, um die Betätigungskräfte einer hydraulischen Fahrzeugbremsanlage zu unterstützen und dadurch auf einem für den Fahrer eines Fahrzeuges angenehm niedrigen Niveau zu halten.

Ebenfalls bekannt sind sogenannte Bremsassistenten. Unter diesem Begriff versteht man üblicherweise ein System, welches einem Fahrer im Fall einer Notbremsung bei im wesentlichen gleicher Betätigungskraft eine erhöhte Bremsleistung zur Verfügung stellen kann. Systeme dieser Art wurden entwickelt, weil Untersuchungen ergeben haben, daß die Mehrzahl der Fahrzeügbenutzer bei einer Notbremsung nicht so stark auf das Bremspedal tritt, wie es zum Erreichen der maximalen Bremsleistung erforderlich wäre. Der Anhalteweg des Fahrzeugs ist deshalb länger als notwendig. Bereits in Produktion befindliche Systeme dieser Art verwenden einen elektromagnetisch betätigbaren Bremskraftverstärker in Verbindung mit einer Einrichtung, die die Betätigungsgeschwindigkeit des Bremspedals ermitteln kann. Stellt diese Einrichtung eine über einem vorgegebenen Schwellenwert liegende Betätigungsgeschwindigkeit fest, wird angenommen, daß eine Notbremssituation vorliegt und der Bremskraftverstärker wird mittels der elektromagnetischen Betätigungseinrichtung voll ausgesteuert, d.h. er stellt seine höchstmögliche Verstärkungsleistung bereit.

Bremskraftverstärker mit elektromagnetischer Betätigungsmöglichkeit sind für Kraftfahrzeuge der unteren und mittleren Preisklasse jedoch zu teuer. Es besteht deshalb der Wunsch nach Lösungen, die eine Bremsassistentfunktion mit geringerem Aufwand erreichen.

Aus der JP-A-9-175 373 ist ein Unterdruckbremskraftverstärker mit mechanischer Notbremsfunktion bekannt. Der Mechanismus zur Realisierung der Notbremsfunktion umfasst einen Permanentmagneten sowie einen mit dem Permanentmagneten zusammenwirkenden Anker. Der Anker ist bezüglich des Permanentmagneten vorgespannt und wird im Zuge einer Annäherung an den Permanentmagneten bei Unterschreitung eines bestimmten Abstandes zum Permanentmagneten von diesem angezogen. Der Anker gelangt dabei in Anlage mit dem Permanentmagneten unter Betätigung einer mit dem Anker gekoppelten Komponente eines Steuerventils.

Der Erfindung liegt die Aufgabe zugrunde, einen verbesserten Unterdruckbremskraftverstärker der genannten Art mit einer Bremsassistentfunktion bereitzustellen, ohne dabei auf ein elektromagnetisch betätigbares Steuerventil zurückgreifen zu müssen. Dabei soll eine unbeabsichtigte Auslösung der Bremsassistentfunktion soweit wie möglich vermieden sein.

Diese Aufgabe ist erfindungsgemäß durch einen Unterdruckbremskraftverstärker gelöst, der die im Patentanspruch 1 angegebenen Merkmale aufweist.

Erfindungsgemäß sind demnach in dem Gehäuse des Steuerventils ein verschiebbar geführter Permanentmagnet und ein damit zusammenwirkender Anker angeordnet. Der Anker ist zum einen mit dem Eingangsglied des Bremskraftverstärkers bzw. des Steuerventils und andererseits mit dem ersten Ventilsitz starr gekoppelt. Der Anker, der relativ zu dem Permanentmagneten hin- und herbewegbar ist, ist federnd in Betätigungsgegenrichtung vorgespannt und in der Ausgangsstellung des Steuerventils in einem ersten Abstand von dem Permanentmagneten gehalten, vorzugsweise durch die federnde Vorspannung entgegen der Betätigungsrichtung. Im Zuge einer Annäherung an den Permanentmagneten, zu der es bei einer Betätigung des Bremskraftverstärkers kommt, kann der Anker einen vorab festgelegten, zweiten Abstand von dem Permanentmagneten unterschreiten, der kleiner als der erste Abstand ist.

Unterschreitet der Anker diesen Abstand, dann wird der Anker von dem Permanentmagneten entgegen der auf den Anker wirkenden federnden Vorspannkraft und unter Aufhebung seiner in Betätigungsrichtung starren Kopplung mit dem Eingangsglied in Anlage mit dem Permanentmagneten gezogen. Auch wenn sich die in den Bremskraftverstärker eingeleitete Betätigungskraft nicht erhöht, bleibt auf diese Weise der mit dem Anker gekoppelte erste Ventilsitz voll geöffnet, so daß der Bremskraftverstärker zwischen seiner Unterdruckkammer und seiner Arbeitskammer die höchstmögliche Druckdifferenz aufbaut, d.h. der Bremskraftverstärker stellt seine maximale Verstärkungsleistung bereit.

Bei bevorzugten Ausführungsbeispielen des erfindungsgemäßen Unterdruckbremskraftverstärkers ist der genannte zweite Abstand durch die Größe der auf den Anker wirkenden federnden Vorspannung festgelegt. Ist die auf den Anker wirkende federnde Vorspannung klein, bedeutet dies, daß der genannte zweite Abstand relativ groß ist, d.h. die Schwelle, die überschritten werden muß, um die Bremsassistentfunktion auszulösen, ist relativ niedrig. Umgekehrt verhält es sich dann, wenn die auf den Anker wirkende federnde Vorspannung groß ist. Durch geeignete Wahl der auf den Anker wirkenden federnden Vorspannung und des genannten ersten Abstandes kann somit eine Auslöseschwelle vorgegeben werden, die einerseits ungewollte Vollbremsungen vermeidet, andererseits aber auch von weniger kräftigen Fahrern im Bedarfsfall noch sicher überwunden werden kann.

Damit die vorgenannte Auslöseschwelle nach Bedarf gewählt werden kann, ohne die vom Bediener bei einem Bremsvorgang aufzubringenden Kräfte über Gebühr zu verändern, ist gemäß einer bevorzugten Ausführungsform des erfindungsgemäßen Unterdruckbremskraftverstärkers ein relativ zum Anker bewegbares Glied gegenüber dem Anker derart federnd vorgespannt, daß es vom Anker in Richtung des Permanentmagneten hervorsteht und in der Ausgangsstellung des Steuerventils (Ruhestellung) den Permanentmagneten nicht berührt. Erst wenn sich das relativ zum Anker bewegbare Glied bei einer Betätigung des Unterdruckbremskraftverstärkers an den Permanentmagneten angelegt hat, wirkt die den genannten zweiten Abstand festlegende, federnde Vorspannung auf den Anker. Wenn der Anker hohlzylindrisch ausgestaltet ist, kann das relativ zum Anker bewegbare und von ihm in Richtung des Permanentmagneten hervorstehende Glied beispielsweise als eine konzentrisch zum Anker angeordnete Abstandshülse ausgebildet sein. Eine solche Abstandshülse kann sich radial außerhalb oder auch radial innerhalb des Ankers befinden. Das relativ zum Anker bewegbare Glied muß jedoch nicht hülsenförmig, sondern kann auch anders ausgestaltet sein, beispielsweise stiftförmig.

Erfindungsgemäß ist der Permanentmagnet im Steuerventilgehäuse verschiebbar geführt und vorzugsweise darüber hinaus entgegen der Betätigungsrichtung federnd gegen einen Anschlag vorgespannt. Eine solche Ausführungsform hat den Vorteil, daß dann, wenn der Anker im Rahmen einer schnell erfolgenden Betätigung des Bremskraftverstärkers den vorab festgelegten, zweiten Abstand zum Permanentmagneten unterschritten hat und demzufolge in Anlage an den Permanentmagneten gezogen worden ist, und die auf das Eingangsglied ausgeübte Betätigungskraft weiter erhöht wird, diese Betätigungskraft nicht vom Eingangsglied über die Einheit aus Anker und Permanentmagnet auf das Steuerventilgehäuse und von dort auf einen dem Unterdruckbremskraftverstärker nachgeschalteten Hauptzylinder übertragen wird, sondern daß eine auf das Eingangsglied ausgeübte, erhöhte Betätigungskraft direkt vom Eingangsglied auf den nachgeschalteten Hauptzylinder übertragen wird. Die Magneteinrichtung, insbesondere der Anker, der Permanentmagnet und die letzteren aufnehmenden Bauteile, können daher weniger stabil ausgeführt sein. Wenn für alle vorstellbaren Betätigungsfälle vermieden sein soll, daß die Magneteinrichtung in einen kraftübertragenden Zustand gerät, dann muß der Permanentmagnet in Betätigungsrichtung Relativ zum Steuerventilgehäuse um eine Strecke verschiebbar sein, die größer als der maximal mögliche Betätigungshub des Eingangsgliedes abzüglich des genannten ersten Abstandes ist.

Um zu vermeiden, daß beim Vorhandensein eines Anschlags für den Permanentmagneten aufgrund von Fertigungstoleranzen eine Schiefstellung der Kontaktfläche des Permanentmagneten bezüglich der Kontaktfläche des Ankers auftritt, die möglicherweise zu einem Verkanten und daraus resultierend eventuell zu einem Verklemmen des Ankers und/oder des Permanentmagneten führen kann, ist bei bevorzugten Ausführungsbeispielen der Anschlag für den Permanentmagneten und/oder die am Permanentmagnet (oder dessen Halterung) ausgebildete, mit dem vorgenannten Anschlag zusammenwirkende Kontaktfläche ballig ausgeformt. Des weiteren besteht zwischen dem Permanentmagnet bzw. dessen Halterung und dem Steuerventilgehäuse ein radiales Spiel. Auf diese Weise kann sich der Permanentmagnet immer korrekt zum Anker ausrichten. Alternativ kann der Anker selbst so ausgestaltet sein, daß seiner Kontaktfläche eine gewisse Schwenkung zum Ausgleich der erwähnten Schiefstellung erlaubt ist.

Obwohl der Permanentmagnet auf jegliche Art und Weise federnd gegen den Anschlag vorgespannt sein kann, wird bevorzugt ein mehrere federnde Kreisringsegmente aufweisendes, insgesamt ringförmiges Federelement zum Vorspannen des Permanentmagneten entgegen der Betätigungsrichtung verwendet. Ein solches Federelement hat eine sehr geringe axiale Länge und vermindert deshalb die gesamte Baulänge des mit einer Magneteinrichtung gemäß der Erfindung ausgestatteten Steuerventils.

Der Anschlag, gegen den sich der federnd entgegen der Betätigungsrichtung vorgespannte Permanentmagnet abstützt, kann beispielsweise eine Stufe im Steuerventilgehäuse sein. Vorzugsweise ist dieser Anschlag jedoch durch einen sich im Steuerventilgehäuse abstützenden Anschlagring gebildet, dessen Axialerstreckung den genannten ersten Abstand festlegt. Durch eine Wahl von Anschlagringen mit unterschiedlicher Axialerstreckung läßt sich somit der genannte erste Abstand zwischen dem Anker und dem Permanentmagneten einstellen. Besonders bevorzugt besteht ein solcher Anschlagring aus Kunststoff, um das Anschlaggeräusch des Permanentmagneten zu dämpfen.

Bei einem anderen bevorzugten Ausführungsbeispiel des erfindungsgemäßen Unterdruckbremskraftverstärkers sind der Anker und der Permanentmagnet durch ein Fesselungsbauteil, das eine Annäherung des Ankers an den Permanentmagneten zuläßt, miteinander zu einer verschiebbaren Einheit gekoppelt. Die den genannten zweiten Abstand festlegende, federnde Vorspannung wirkt bei diesem Ausführungsbeispiel nur dann auf den Anker, wenn die verschiebbare Einheit aus Anker und Permanentmagnet an einem Anschlag anliegt, der die Verschiebung der Einheit in Betätigungsrichtung verhindert. Mit einer solchen Ausführungsform kann der genannte zweite Abstand relativ klein gewählt werden, ohne daß die dann erforderliche, hohe auf den Anker wirkende federnde Vorspannung sich beim Betätigen des Bremskraftverstärkers durch eine entsprechend erhöhte Ansprechkraft negativ bemerkbar macht. Die verschiebbare Einheit aus Anker und Permanentmagnet kann nämlich zunächst gegen eine nur geringe Federkraft in Betätigungsrichtung verschoben werden, wobei sich die Stellung des Ankers relativ zum Permanentmagneten nicht ändert. Erst wenn die verschiebbare Einheit an dem genannten Anschlag anliegt, wird die volle auf den Anker wirkende Federkraft für den Benutzer des Bremskraftverstärkers spürbar. Weil ein solcher Zustand, d.h. das Anliegen der verschiebbaren Einheit an dem Anschlag, nur in einer Notbremssituation auftritt, in der der Fahrer ohnehin relativ stark und schnell auf das Bremspedal tritt, wird die dann erhöhte Ansprechkraft des Bremskraftverstärkers vom Fahrer in der Praxis gar nicht bemerkt.

Vorzugsweise ist die verschíebtare Einheit aus Anker und Permanentmagnet in dem Gehäuse einer Magneteinrichtung geführt, das im Steuerventilgehäuse fixiert ist und das den Anschlag bereitstellt.

Ausführungsformen des erfindungsgemäßen Unterdruckbremskraftverstärkers, die eine verschiebbare Einheit aus Anker und Permanentmagnet aufweisen, sind mit Vorteil so ausgestaltet, daß eine erste Feder den Anker und den Permanentmagneten auseinander drückt und daß eine zweite Feder die verschiebbare Einheit entgegen der Betätigungsrichtung vorspannt. Vorzugsweise legt die gemeinsame Kraft beider Federn den genannten zweiten Abstand fest, ab dessen Unterschreiten die vom Permanentmagneten auf den Anker ausgeübte Anziehungskraft die entgegengerichtet wirkende Federkraft übersteigt, so daß der Anker in Anlage mit dem Permanentmagneten gerät. Konstruktiv vorteilhaft ist bei solchen Ausführungsformen die erste Feder axial zwischen dem Anker und dem Fesselungsbauteil eingespannt und der Permanentmagnet ist bezüglich des Fesselungsbauteils fixiert. Letzeres kann beispielsweise dadurch erreicht werden, daß der Permanentmagnet in dem Fesselungsbauteil aufgenommen ist.

Die zweite Feder stützt sich bei den vorgenannten Ausführungsformen mit der verschiebbaren Einheit aus Anker und Permanentmagnet vorzugsweise mit ihrem einen Ende an dem Anschlag und mit ihrem anderen Ende am Anker ab. Um Platz zu sparen ist die zweite Feder vorzugsweise koaxial zur ersten Feder angeordnet. Wenn beide Federn Schraubendruckfedern sind, kann beispielsweise die zweite Feder von der ersten Feder umgeben sein.

Gemäß einer bevorzugten Ausgestaltung des erfindungsgemäßen Unterdruckbremskraftverstärkers mit einer verschiebbaren Einheit aus Anker und Permanentmagnet besteht der Anker aus einer Basis und einer damit verbundenen, dem Permanentmagneten zugewandten Magnetplatte. Auf diese Weise braucht nur die Magnetplatte aus einem Material zu bestehen, das vom Permanentmagneten angezogen wird, während die Basis des Ankers aus nicht magnetischem Material, beispielsweise aus einem Kunststoff, gefertigt sein kann. Ist der Anker hohlzylindrisch, dann ist die Magnetplatte vorzugsweise ringförmig.

Bei bevorzugten Ausführungsformen des erfindungsgemäßen Unterdruckbremskraftverstärkers ist der erste Ventilsitz des Steuerventils, der die Belüftung der Arbeitskammer steuert, in Betätigungsrichtung über den Anker mit dem Eingangsglied starr gekoppelt. Der erste Ventilsitz kann jedoch auch unmittelbar vom Eingangsglied betätigt werden.

Bei allen Ausführungsformen des erfindungsgemäßen Unterdruckbremskraftverstärkers ist der erste Ventilsitz vorzugsweise an einem mit dem Anker starr verbundenen, insbesondere hülsenförmigen Fortsatz ausgebildet. Auf diese Weise wird jede Bewegung des Ankers spielfrei auf den ersten Ventilsitz übertragen.

Wenn der erste Ventilsitz an einem mit dem Anker starr verbundenen Fortsatz ausgebildet ist, reicht vorzugsweise ein mit dem Eingangsglied starr gekoppelter Riegel in eine Ausnehmung des Fortsatzes, in der der Riegel in Verschieberichtung des Eingangsgliedes ein Spiel hat, das kleiner als der maximal mögliche Betätigungshub des Eingangsgliedes ist. Auf diese Weise kann der mit dem Eingangsglied starr gekoppelte Riegel bei der Rückkehrbewegung des Eingangsgliedes, d.h. beim Lösen der Bremse, den mit dem Anker starr verbundenen Fortsatz ggf. vom Permanentmagneten lösen, d.h. die Bremsassistentfunktion abschalten. Die genaue Form der Ausnehmung in dem Fortsatz ist dabei unwichtig, entscheidend ist lediglich, daß der Riegel oder ein anderes mit dem Eingangsglied starr verbundenes Teil noch während der Rückkehrbewegung in einen Formschluß mit dem Fortsatz gerät.

Vorzugsweise ist bei allen Ausführungsformen des erfindungsgemäßen Unterdruckbremskraftverstärkers das Eingangsglied federnd entgegen der Betätigungsrichtung vorgespannt. Bei einem Lösen der Bremse stellt diese federnde Vorspannung das Eingangsglied in die Ausgangsstellung zurück. In konstruktiv vorteilhafter Weise wird diese federnde Vorspannung des Eingangsgliedes während seiner Rückkehrbewegung in die Ausgangsstellung auch dazu benutzt, den Anker vom Permanentmagneten zu lösen, beispielsweise mittels des zuvor genannten Riegels, der in eine Ausnehmung des mit dem Anker gekoppelten Fortsatzes eingreift.

Um möglicherweise irritierende Anschlaggeräusche zu vermindern oder zu eliminieren, zu denen es durch die Rückhubbewegung des Ankers kommen kann, die nach einem Lösen des Ankers von dem Permanentmagneten erfolgt, ist bei allen Ausführungsformen des erfindungsgemäßen Unterdruckbremskraftverstärkers diese Rückhubbewegung vorzugsweise durch ein Elastomerelement gedämpft, das zwischen dem Anker und der Anschlagfläche angeordnet ist, auf die der Anker sich bei seiner Rückhubbewegung zubewegt. In einer einfachen und dennoch wirkungsvollen Ausführungsform ist das Elastomerelement ein O-Ring.

Meistens wird eine Notbremsung aus der unbetätigten Stellung des Unterdruckbremskraftverstärkers ausgelöst werden. Mit anderen Worten: Die Bremsanlage des Fahrzeuges wird normalerweise nicht betätigt sein, wenn eine Notbremssituation auftritt, sondern der Fahrer wird als Reaktion auf die Notbremssituation die Bremsanlage erst betätigen. Es können jedoch durchaus auch Situationen auftreten, bei denen im Verlauf einer Bremsung eine Notbremsung erforderlich wird, beispielsweise wenn ein Fahrer die Entfernung zu einem die Fahrt behindernden Gegenstand unterschätzt hat. In solchen Situationen, d.h. wenn der Fahrer während einer bereits eingeleiteten Bremsung plötzlich eine Notbremsung ausführen möchte, muß zur Auslösung der Bremsassistentfunktion eine wesentlich höhere Arbeit (Kraft x Weg) aufgewandt werden als für eine Auslösung der Bremsassistentfunktion aus dem unbetätigten Zustand der Bremsanlage bzw. des Unterdruckbremskraftverstärkers heraus erforderlich ist. Dies rührt daher, daß im betätigten Zustand der Bremsanlage die in deren Hydrauliksystem erzeugten Drücke auf den Unterdruckbremskraftverstärker und insbesondere auf dessen Eingangsglied zurückwirken. Während einer Bremsung muß demnach zunächst der in der Hydraulikkammer des Hauptzylinders, der dem Unterdruckbremskraftverstärker funktionell nachgeschaltet ist, vorhandene Druck überwunden werden, bevor es zu einer weiteren Verschiebung des Eingangsgliedes des Unterdruckbremskraftverstärkers in Betätigungsrichtung kommt. Unter Umständen kann es in solchen Situationen für nicht so kräftige Fahrer schwierig sein, die Bremsassistentfunktion auszulösen.

Um auch bei bereits betätigter Bremsanlage, d.h. während einer Bremsung, ein sicheres Auslösen der Bremsassistentfunktion zu gewährleisten, verkleinert sich bei bevorzugten Ausführungsformen des erfindungsgemäßen Unterdruckbremskraftverstärkers, bei denen der Permanentmagnet entweder zusammen mit dem Anker oder auch für sich im Steuerventilgehäuse verschiebbar ist, der genannte, erste Abstand zwischen dem Anker und dem Permaneritmagneten in Abhängigkeit der aus dem Hauptzylinder auf den Unterdruckbremskraftverstärker zurückwirkenden Gegenkraft. Mit zunehmender Gegenkraft verkleinert sich also der erste Abstand zwischen dem Anker und dem Permanentmagneten, so daß der bis zum Erreichen des vorab festgelegten, zweiten Abstandes - der im wesentlichen die Auslöseschwelle der Bremsassistentfunktion festlegt - noch zu überwindende Weg ebenfalls kleiner wird. Bei geeigneter Auslegung des Systems kann auf diese Weise erreicht werden, daß zum Auslösen der Bremsassistentfunktion immer die gleiche Arbeit erforderlich ist, unabhängig davon, ob die Bremsanlage betätigt oder unbetätigt ist.

Bei bevorzugten Ausführungsbeispielen wirkt die Gegenkraft auf eine Verstellhülse, die mit dem Permanentmagnet oder seiner Halterung verbunden ist. Diese Verstellhülse kann starr mit dem Permanentmagneten verbunden sein und sie kann darüber hinaus einen Anschlag aufweisen, der mit dem Steuerventilgehäuse zusammenwirkt und die Verkleinerung des ersten Abstandes begrenzt, vorzugsweise auf ein etwas über dem zweiten Abstand liegendes Maß. Auf diese Weise wird eine unbeabsichtigte Auslösung der Bremsassistentfunktion vermieden, zu der es kommen würde, wenn in Zuge der Verkleinerung des ersten Abstandes der zweite Abstand unterschritten würde.

Die Verstellhülse kann aber auch einen Anschlag aufweisen, gegen den der Permanentmagnet (oder dessen Halterung) entgegen der Betätigungsrichtung federnd vorgespannt ist. Bei einer solchen Ausgestaltung kann der Permanentmagnet sich in Betätigungsrichtung relativ zur Verstellhülse verschieben. Dies kann bei ausgelöster Bremsassistentfunktion von Vorteil sein, um einen Kraftschluß zwischen dem Permanentmagnet und der Verstellhülse zu verhindern.

Viele heutzutage verwendete Unterdruckbremskraftverstärker weisen auf ihrer Kraftausgangsseite eine Reaktionsscheibe aus Elastomermaterial auf, die zwischen den Unterdruckbremskraftverstärker und den damit verbundenen Hauptzylinder geschaltet ist. Wie Fachleuten auf diesen Gebiet bekannt ist, wird mittels einer solchen Reaktionsscheibe das Ansprechen eines Unterdruckbremskraftverstärkers aus seiner unbetätigten Stellung heraus verbessert. Gemäß einer Ausführungsform des erfindungsgemäßen Unterdruckbremskraftverstärkers wird die vom Hauptzylinder auf den Unterdruckbremskraftverstärker zurückwirkende Gegenkraft von dieser Reaktionsscheibe auf die Verstellhülse übertragen. Die Verstellhülse wiederum stützt sich in Betätigungsgegenrichtung, d.h. in Richtung der Gegenkraft, über ein federnd nachgiebiges Element am Steuerventilgehäuse ab. Die Komprimierung des federnd nachgiebigen Elements bei zunehmender Gegenkraft führt dann zu einer Verschiebung der Verstellhülse entgegen der Betätigungsrichtung und damit zu der gewünschten Annäherung des Permanentmagneten an den Anker. Das federnd nachgiebige Element, über das die Verstellhülse sich am Steuerventilgehäuse abstützt, kann beispielsweise ein Elastomerring sein, aber auch eine Schraubenfeder, eine Federscheibe, eine Wellscheibe oder ähnliches.

Gemäß einer anderen Ausführungsform, bei der die zuvor erwähnte Reaktionsscheibe aus Elastomermaterial nicht vorhanden ist, wird die vom Hauptzylinder auf den Unterdruckbremskraftverstärker zurückwirkende Gegenkraft von einer Rückwirkungshülse vorzugsweise unmittelbar auf die Verstellhülse übertragen, so daß letztere sich wiederum mit zunehmender Gegenkraft entgegen der Betätigungsrichtung verschiebt. Bei dieser Ausführungsform ist die Verstellhülse mittels einer separaten Feder in Betätigungsrichtung vorgespannt.

Bei den zuvor beschriebenen Ausführungsbeispielen des erfindungsgemäßen Unterdruckbremskraftverstärkers wirken auch im unbetätigten Zustand desselben noch Magnetkräfte auf den Anker. Die im Steuerventil vorhandenen Federn sind so ausgelegt, daß sie diesen in der Ruhestellung vom Permanentmagneten auf den Anker ausgeübten Magnetkräften entgegenwirken, um eine Annäherung des Ankers an den Permanentmagneten zu verhindern. Die Federkraft der genannten Federn muß deshalb etwas größer als üblich sein, was erhöhte Betätigungskräfte nach sich zieht, denn die Kraft der Federn muß bei einer Betätigung des Unterdruckbremskraftverstärkers überwunden werden.

Um hier eine Verbesserung zu erreichen, ist bei bevorzugten Ausführungsbeispielen des erfindungsgemäßen Unterdruckbremskraftverstärkers eine auf den Permanentmagnet wirkende Hebelanordnung vorhanden, die den genannten ersten Abstand zwischen dem Anker und dem Permanentmagneten bei einer Betätigung des Steuerventils verkleinert, ohne dabei den genannten zweiten Abstand zwischen dem Anker und dem Permanentmagneten zu unterschreiten. Auf diese Weise kann der erste Abstand, d.h. der Abstand, den Permanentmagnet und Anker in ihrer Ruhestellung voneinander haben, relativ groß gewählt werden, ohne daß dies zu einer Erhöhung des Weges führen würde, die zum Auslösen der Bremsassistentfunktion überwunden werden muß. Der größere erste Abstand zwischen dem Permanentmagnet und dem Anker verkleinert die in der Ruhestellung auf den Anker wirkenden Magnetkräfte, so daß die entsprechenden Federn des Steuerventils schwächer sein können, wodurch die zur Betätigung des Steuerventils erforderliche Kraft herabgesetzt ist. Sobald das Steuerventil betätigt wird, sorgt die Hebelanordnung dafür, daß der Permanentmagnet in Richtung auf den Anker bewegt wird, um den ersten Abstand zu verkleinern.

Vorzugsweise ist der Permanentmagnet federnd in Anlage mit der Hebelanordnung vorgespannt, so daß jede Bewegung der Hebelanordnung unmittelbar auf den Permanentmagnet übertragen wird.

Um bei betätigtem Steuerventil einen definierten Abstand zwischen dem Anker und dem Permanentmagneten zu erreichen, der selbstverständlich größer als der genannte zweite Abstand sein muß, drückt die Hebelanordnung den Permanentmagneten bei einer Betätigung des Steuerventils vorzugsweise gegen einen Anschlag, der beispielsweise innen am Steuerventilgehäuse ausgebildet ist.

Bei einer besonders bevorzugten Ausführungsform des erfindungsgemäßen Unterdruckbremskraftverstärkers stützt sich die Hebelanordnung mit ihrem einen Hebelende am Eingangsglied oder einem damit verbundenen Kraftabgabestößel und mit ihrem anderen Hebelende am Permanentmagneten ab. Das Steuerventilgehäuse bildet bei dieser Ausführungsform einen Drehpunkt für die Hebelanordnung.

In konstruktiv vorteilhafter weil kostengünstiger, platzsparender und sehr funktionssicherer Weise ist die Hebelanordnung ein insgesamt ringförmiges, aus mehreren jeweils einen U-förmigen Querschnitt aufweisenden und sich radial erstreckenden Armen gebildetes Element, dessen Arme radial innen miteinander verbunden sind. Das Element wird in der Mitte von dem Kraftabgabestößel durchsetzt und stützt sich an einer Stufe desselben ab. Jeder Arm des Elements berührt etwa in der Mitte seiner Erstreckung eine im Steuerventilgehäuse ausgebildete Stufe, die somit den Drehpunkt bildet, um den jeder Arm bei einer Verschiebung des Kraftabgabestößels kippt.

Mehrere bevorzugte Ausführungsbeispiele eines erfindungsgemäßen Unterdruckbremskraftverstärkers werden im folgenden anhand der beigefügten, schematischen Zeichnungen näher erläutert. Es zeigt:
- Fig. 1: einen Längsschnitt durch den interessierenden Bereich eines die Funktonsweise eines erfindungsgemäßen Unterdruckbremskraftverstärkers veranschaulichenden Unterdruckbremskraftverstärkers in einer Ruhestellung,
- Fig. 2: die Ansicht gemäß Fig. 1 in einer ersten Betätigungsstellung,
- Fig. 3: die Ansicht gemäß Fig. 1 in einer zweiten Betätigungsstellung (Bremsassistentfunktion),
- Fig. 4: die Ansicht gemäß Fig. 1 in einer dritten Betätigungsstellung kurz vor dem Abschalten der Bremsassistentfunktion,
- Fig. 5: die Ansicht gemäß Fig. 1 bei der Rückkehr in die Ruhestellung,
- Fig. 6: einen Unterdruckbremskraftverstärker mit konzentrisch zu einem Anker angeordneter Abstandshülse in einer Ansicht ähnlich Fig. 1 und in Ruhestellung,
- Fig. 7: ein Diagramm, das den Zusammenhang zwischen einer aufgebrachten Eingangskraft und der dadurch erzielten Bremskraft gemäß den verschiedenen Betätigungsstellungen wiedergibt,
- Fig. 8: ein erstes Ausführungsbeispiel eines erfindungsgemäßen Unterdruckbremskraftverstärkers in einer Ansicht ähnlich Fig. 1 und In Ruhestellung,
- Fig. 9: ein zweites Ausführungsbeispiel eines erfindungsgemäßen Unterdruckbremskraftverstärkers in einer Ansicht ähnlich Fig. 1 und in Ruhestellung,
- Fig. 10: ein drittes Ausführungsbeispiel eines erfindungsgemäßen Unterdruckbremskraftverstärkers in einer Ansicht ähnlich Fig. 1 und in Ruhestellung,
- Fig. 11: ein viertes Ausführungsbeispiel eines erfindungsgemäßen Unterdruckbremskraftverstärkers in einer Ansicht ähnlich Fig. 1 und in Ruhestellung,
- Fig. 12: ein fünftes, den in den Fig. 8 bis 11 dargestellten Ausführungsbeispielen ähnliches Ausführungsbeispiel eines erfindungsgemäßen Unterdruckbremskraftverstärkers in einer Ansicht ähnlich Fig. 1 und in Ruhestellung,
- Fig. 13: ein gegenüber Fig. 12 etwas abgewandeltes, sechstes Ausführungsbeispiel eines erfindungsgemäßen Unterdruckbremskraftverstärkers in einer Ansicht ähnlich Fig. 1 und in Ruhestellung,
- Fig. 14: ein gegenüber den Fig. 12 und 13 nochmals abgewandeltes, siebtes Ausführungsbeispiel eines erfindungsgemäßen Unterdruckbremskraftverstärkers in einer Ansicht ähnlich Fig. 1 und in Ruhestellung,
- Fig. 15: ein achtes Ausführungsbeispiel eines erfindungsgemäßen Unterdruckbremskraftverstärkers mit einer Hebelanordnung zur Verstellung eines ersten Abstandes zwischen Permanentmagnet und Anker in einer Ansicht ähnlich Fig. 1 und In Ruhestellung,
- Fig. 16: das achtes Ausführungsbeispiel gemäß Fig. 15 bei eingeschalteter Bremsassistentfunktion,
- Fig. 17: das achte Ausführungsbeispiel gemäß Fig. 15 und 16 kurz vor dem Ausschalten der Bremsassistentfunktion,
- Fig. 18: ein neuntes Ausführungsbeispiel eines erfindungsgemäßen Unterdruckbremskraftverstärkers mit einer Einrichtung zur Verkürzung des ersten Abstandes zwischen Permanentmagnet und Anker in Abhängigkeit eines im Betrieb auftretenden Gegendrucks in einer Ansicht ähnlich Fig. 1 und in Ruhestellung, und
- Fig. 19: ein gegenüber dem neunten Ausführungsbeispiel abgewandeltes, zehntes Ausführungsbeispiel, ebenfalls mit einer Einrichtung zur Verkürzung des ersten Abstandes zwischen Permanentmagnet und Anker in Abhängigkeit eines im Betrieb auftretenden Gegendrucks.

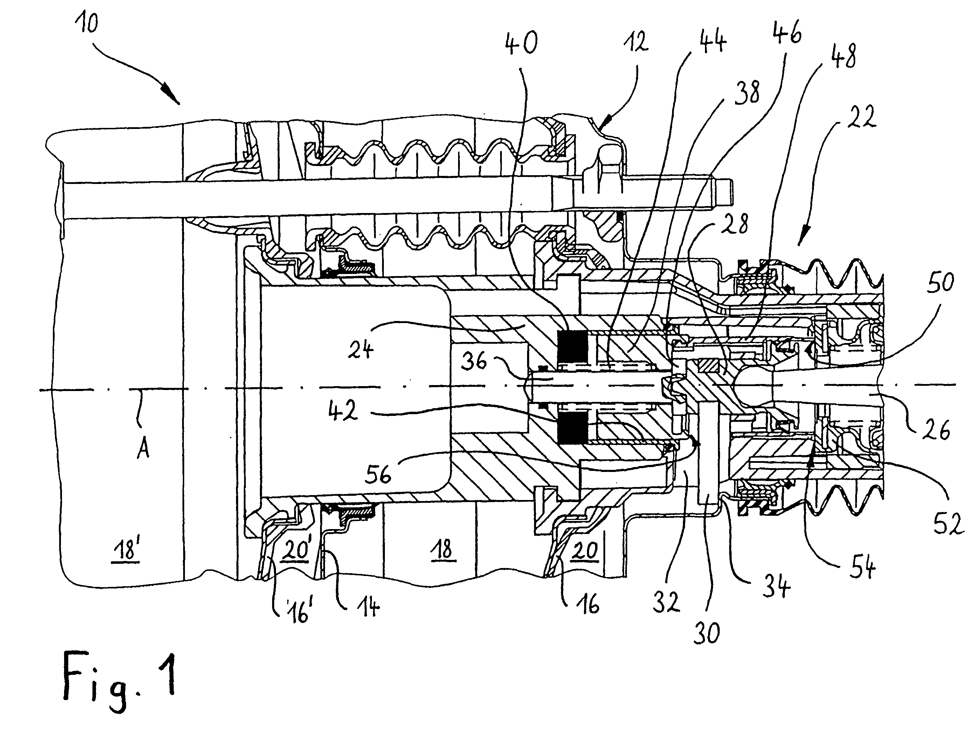

In Fig. 1 ist ein funktionell in wesentlichen Punkten mit dem erfindungsgemäßen Bremskraftverstärker übereinstimmender, jedoch nicht zur Erfindung gehöriger Bremskraftverstärker 10 mit einem Gehäuse 12 gezeigt, dessen Innenraum durch eine feststehende Wand 14 in zwei Abschnitte unterteilt ist. In dem einen Abschnitt trennt eine bewegliche Wand 16 eine Unterdruckkammer 18 von einer Arbeitskammer 20, während in dem anderen Abschnitt eine weitere bewegliche Wand 16' eine Unterdruckkammer 18' von einer Arbeitskammer 20' trennt.

Die Unterdruckkammem 18, 18' stehen im Betrieb des Bremskraftverstärkers 10 ständig mit einer Unterdruckquelle in Verbindung, beispielsweise mit dem Ansaugtrakt eines Verbrennungsmotors oder mit einer Unterdruckpumpe. Ein Steuerventil 22 mit einem Gehäuse 24 ist dazu vorgesehen, wahlwelse eine Verbindung der Arbeitskammem 20, 20' mit den Unterdruckkammern 18, 18' herzustellen, damit auch die Arbeitskammem 20, 20' evakuiert werden, oder um eine Verbindung zwischen den evakuierten Arbeitskammem 20, 20' und der Umgebungsatmosphäre, d.h. dem Umgebungsdruck herzustellen. Die beiden beweglichen Wände 16, 16' sind kraftübertragend mit dem Steuerventilgehäuse 24 gekoppelt. Die dargestellte Bauweise des Bremskraftverstärkers mit zwei Unterdruckkammern 18, 18' und zwei Arbeitskammem 20, 20' wird als Tandembauweise bezeichnet. Häufig weisen Unterdruckbremskraftverstärker jedoch nur eine Unterdruckkammer und eine Arbeitskammer auf.

Der Bremskraftverstärker 10 wird mittels eines stangenförmigen, federnd in seine Ausgangsstellung vorgespannten Eingangsgliedes 26 betätigt, das längs einer Achse A in das Steuerventilgehäuse 24 ragt und mit seinem einen, kugelig ausgeführten Ende in einem Übertragungskolben 28 befestigt ist.

Mit dem Übertragungskolben 28 starr verbunden ist ein Riegel 30, der sich rechtwinklig zur Achse A von dem Übertragungskolben 28 weg und durch einen im Steuerventilgehäuse 24 ausgebildeten Kanal 32 erstreckt. In der in Fig. 1 gezeigten Position liegt der Riegel 30 an einem Anschlag 34 des Bremskraftverstärkergehäuses 12 an, der die Ruhestellung des Steuerventils 22 definiert, d.h. die Stellung aller Bauteile des Steuerventils 22 zueinander, die diese bei unbetätigtem Bremskraftverstärker 10 einnehmen. Die Seitenwände des Kanals 32 begrenzen die Bewegungsmöglichkeit des Riegels 30 längs der Achse A, d.h. der maximale Hub des Riegels 30 längs der Achse A ist durch den Abstand gegeben, den die Seitenwände des Kanals 32 voneinander haben.

Das dem kugelig ausgeführten Ende des Eingangsgliedes 26 gegenüberliegende Ende des Übertragungskolbens 28 liegt an einem Kraftabgabestößel 36 an, der eine über das Eingangsglied 26 in den Bremskraftverstärker 10 eingeleitete Betätigungskraft auf einen dem Bremskraftverstärker nachgeschalteten, hier nicht gezeigten Hauptzylinder einer hydraulischen Fahrzeugbremsanlage überträgt. Der Kraftabgabestößel 36 durchsetzt einen konzentrisch zu ihm angeordneten, hohlzylindrischen Anker 38 und einen ebenfalls konzentrisch zum Kraftabgabestößel 36 angeordneten, ringförmigen Permanentmagneten 40, der in einer entsprechenden Bohrung des Steuerventilgehäuses 24 aufgenommen ist und dort von einer Spannhülse 42 fixiert wird, die gleichzeitig der Führung des Ankers 38 dient.

Der mit dem Permanentmagneten 40 zusammenwirkende Anker 38 ist längs der Achse A verschiebbar. Eine radial zwischen dem Permanentmagneten 40 bzw. dem Anker 38 und dem Kraftabgabestößel 36 angeordnete Druckfeder 44, deren eines Ende sich am Steuerventilgehäuse 24 und deren anderes Ende sich am Anker 38 abstützt, spannt den Anker 38 federnd entgegen der Betätigungsrichtung und gegen einen am Kraftabgabestößel 36 ausgebildeten Ringbund 46 vor. Die Druckfeder 44 sorgt dafür, dass zwischen dem Anker 38 und dem Permanentmagneten 40 in der Ruhestellung des Steuerventils 22 ein axialer Luftspalt existiert, d.h. dass der Anker 38 in einem ersten Abstand von dem Permanentmagneten 40 gehalten wird.

An der dem Eingangsglied 26 zugewandten Seite des Ankers 38 ist mit letzterem ein hülsenförmiger Fortsatz 48 starr verbunden, an dessen freiem Ende ein erster ringförmiger Ventilsitz 50 des Steuerventils 22 ausgebildet ist. Der erste Ventilsitz 50 wirkt mit einem federnd gegen ihn vorgespannten, ebenfalls ringförmigen Ventildichtglied 52 zusammen und kann die Verbindung zwischen der Umgebungsatmosphäre und den Arbeitskammem 20, 20' des Bremskraftverstärkers 10 steuern.

Radial außerhalb des ersten Ventilsitzes 50 und konzentrisch zu diesem ist innen am Steuerventilgehäuse 24 ein zweiter ringförmiger Ventilsitz 54 des Steuerventils 22 ausgebildet, der ebenfalls mit dem Ventildichtglied 52 zusammenwirkt und der die Verbindung zwischen den Unterdruckkammern 18, 18' und den Arbeitskammem 20, 20' des Bremskraftverstärkers 10 steuern kann.

Wie dargestellt, ragt der Riegel 30 durch eine Ausnehmung 56 des hülsenförmigen Fortsatzes 48. In dieser Ausnehmung 56 hat der Riegel 30 in Richtung der Achse A ein Spiel, das kleiner als der maximal mögliche Hub des Riegels 30 In dem Kanal 32 ist

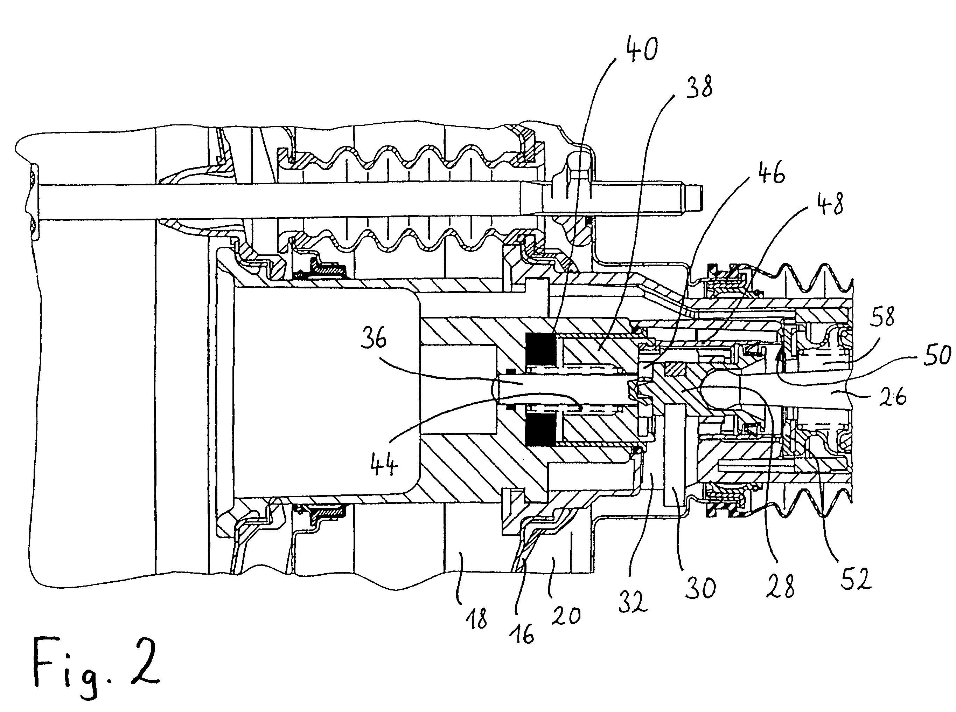

Anhand der Figuren 1 bis 5 wird nun die Funktion des Bremskraftverstärkers 10 näher erläutert. Eine Betätigung des Bremskraftverstärkers 10 verschiebt das Eingangsglied 26 in den Bremskraftverstärker 10 bzw. das Steuerventil 22 hinein, d.h. in den Figuren nach links. Diese Verschiebung des Eingangsgliedes 26 wird auf den Übertragungskolben 28 und von diesem auf den Kraftabgabestößel 36 übertragen. Der Kraftabgabestößel 36 nimmt dabei über seinen Ringbund 46 auch den Anker 38 in Betätigungsrichtung mit (siehe Fig. 2).

Die Verschiebung des Ankers 38 bewirkt, dass der am hohlzylindrischen Fortsatz 48 ausgebildete, erste Ventilsitz 50 von dem Ventildichtglied 52 abgehoben wird, wodurch Umgebungsluft durch einen das Eingangsglied 26 umgebenden Kanal 58 und vorbei am geöffneten Ventilsitz 50 durch den im Steuerventilgehäuse 24 ausgebildeten Kanal 32 in die Arbeitskammer 20 und von dort in die weitere Arbeitskammer 20' gelangen kann. An den beweglichen Wänden 16 und 16' entsteht daraufhin eine Druckdifferenz und die daraus resultierende Kraft wird von den beweglichen Wänden 16 und 16' auf das Steuerventilgehäuse 24 übertragen, welches diese Kraft an den bereits erwähnten, hier nicht dargestellten Hauptzylinder abgibt.

Der erste Ventilsitz 50 des Steuerventils 22 wird also in Abhängigkeit der Verschiebung des Eingangsgliedes 26 relativ zum Steuerventilgehäuse 24 mehr oder weniger weit geöffnet, wodurch sich eine entsprechend ansteigende Unterstützungskraft des Bremskraftverstärkers 10 ergibt, die aus der jeweils an den beweglichen Wänden 16, 16' wirkenden Druckdifferenz resultiert.

Bei üblichen Betriebsbremsungen, die hier als Normalbremsungen bezeichnet werden, wird das Eingangsglied 26 und damit auch der Anker 38 nur relativ wenig in Betätigungsrichtung verschoben. Die Druckfeder 44 ist so ausgelegt, dass die von ihr auf den Anker 38 ausgeübte Rückstelikraft während solcher Normalbremsungen größer als die Kraft des Permanentmagneten 40 ist, die den Anker 38 in Betätigungsrichtung, d.h. In den Figuren nach links zu ziehen versucht. Auf diese Weise ist der erste Ventilsitz 50 während einer Normalbremsung mit dem Eingangsglied 26 nicht nur in Betätigungsrichtung (über den Übertragungskolben 28, den Ringbund 46 des Kraftabgabestößels 36, sowie den Anker 38 und dessen hülsenförmigen Fortsatz 48), sondern auch entgegen der Betätigungsrichtung starr gekoppelt (über den mit dem Anker 38 verbundenen hülsenförmigen Fortsatz 48, den von der Druckfeder 44 gegen den Ringbund 46 gedrückten Anker 38 sowie den Übertragungskolben 28). Jede Verschiebung des Eingangsgliedes 26 wird demnach verzögerungsfrei auf den ersten Ventilsitz 50 übertragen.

Wird eine im Rahmen einer Normalbremsung zunächst auf das Eingangsglied 26 aufgebrachte Betätigungskraft nicht erhöht, kommt das Ventildichtglied 52 im Zuge der Verschiebung des Steuerventilgehäuses 24 wieder mit dem ersten Ventilsitz 50 in Berührung, so dass die Luftzufuhr in die Arbeitskammern 20 und 20' unterbrochen wird (Gleichgewichtsstellung, beide Ventilsitze 50 und 54 geschlossen).

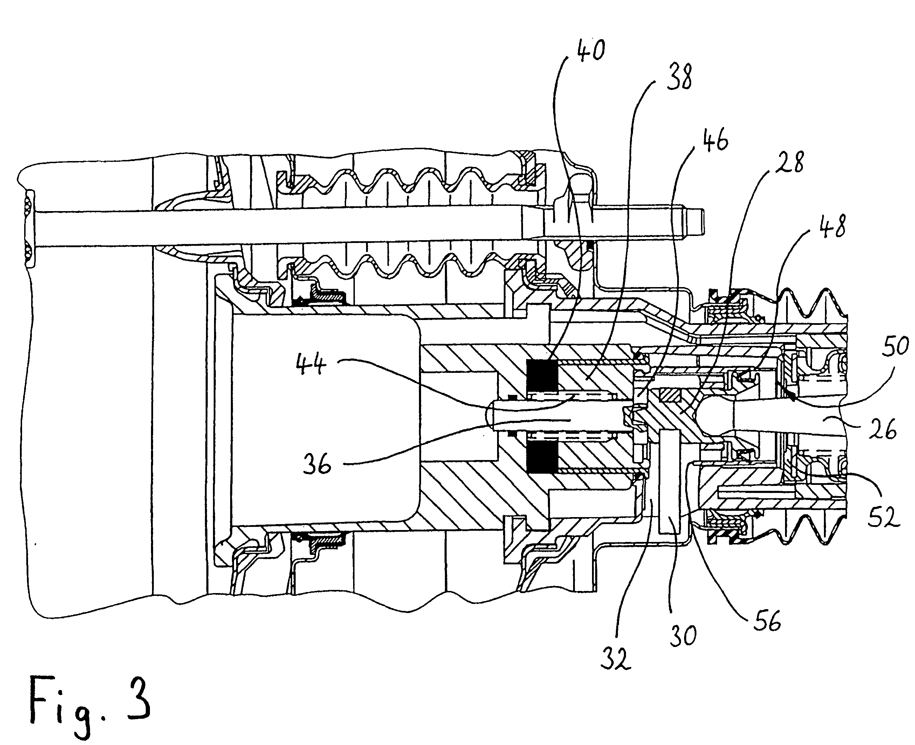

Bei einer schnell und mit relativ großem Hub erfolgenden Betätigung des Eingangsgliedes 26, wie sie typisch für eine Panikbremsung (Notbremsung) ist, nähert sich jedoch der Anker 38 dem Permanentmagneten 40 stärker an, so dass ab Unterschreitung eines zweiten Abstandes zwischen dem Anker 38 und dem Permanentmagneten 40, der kleiner als der zuvor genannte erste Abstand ist, die Kraft der Druckfeder 44 nicht mehr dazu ausreicht, den Anker 38 vom Permanentmagneten 40 femzuhalten. Statt dessen überwiegt dann die vom Permanentmagneten 40 auf den Anker 38 ausgeübte Kraft und letzterer gerät in Anlage mit dem Permanentmagneten 40 (siehe Fig. 3). Damit ist der maximal mögliche Öffnungsquerschnitt des ersten Ventilsitzes 50 erreicht und es strömt Umgebungsluft in die Arbeitskammern 20, 20' ein, bis der maximal mögliche Differenzdruck und damit die maximal mögliche Verstärkungskraft des Bremskraftverstärkers 10 erreicht ist (sog. Aussteuerpunkt des Bremskraftverstärkers).

Da der Anker 38 sich durch das Inanlagekommen mit dem Permanentmagneten 40 von dem Ringbund 46 des Kraftabgabestößels 36 gelöst hat, ist der erste Ventilsitz 50 vom Eingangsglied 26 entkoppelt und bleibt deshalb selbst dann geöffnet, wenn ein den Bremskraftverstärker 10 bedienender Fahrer im weiteren Verlauf der Notbremsung die notwendige Eingangskraft nicht mehr vollständig aufbringen kann. Mit anderen Worten, selbst wenn das Eingangsglied 26 sich im weiteren Verlauf der Notbremsung aufgrund der sich dann einstellenden, hohen Rückwirkkräfte etwas entgegen der Betätigungsrichtung verschiebt, führt dies nicht zum Schließen des ersten Ventilsitzes 50, da diese Rückstellbewegung des Eingangsgliedes 26 nicht auf den ersten Ventilsitz 50 übertragen wird.

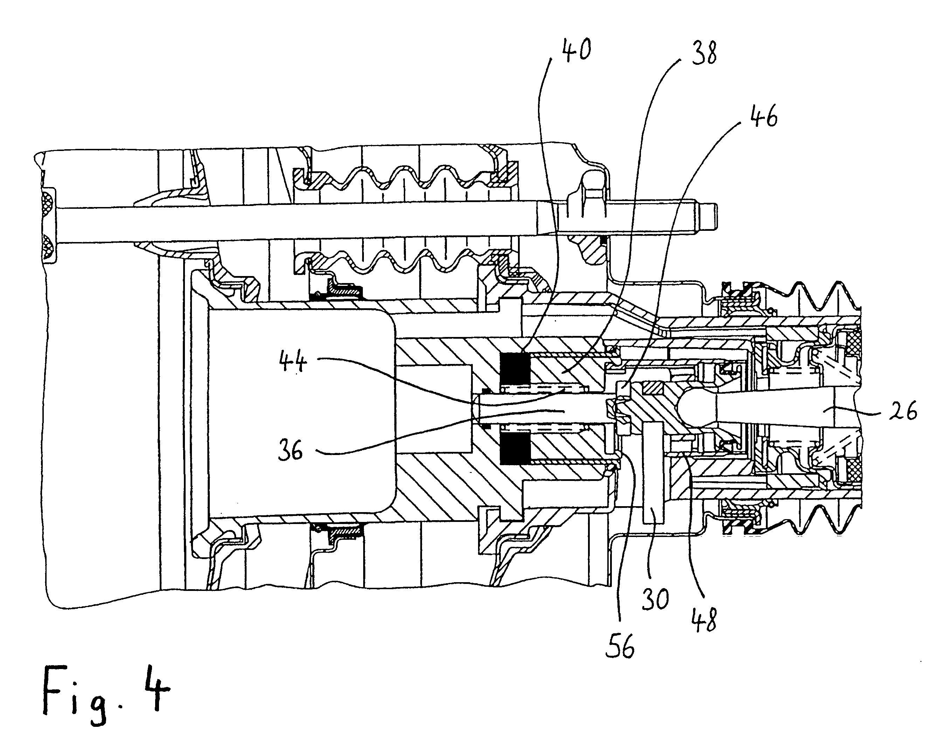

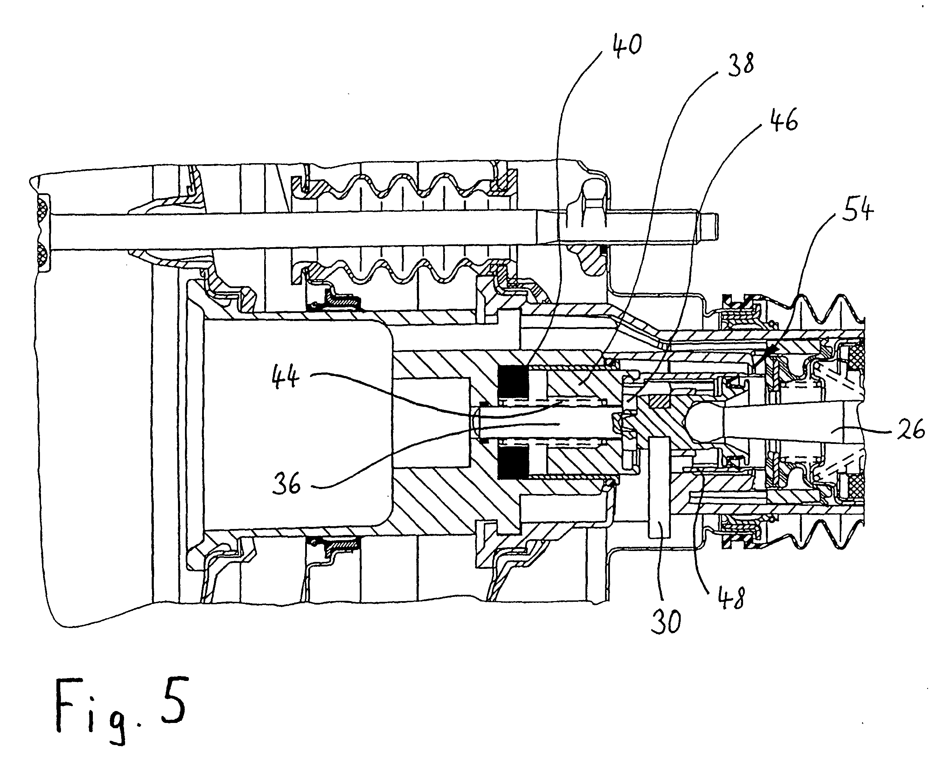

Erst wenn der Rückhub des Eingangsgliedes 26 so groß ist, dass der Riegel 30 in Kontakt mit dem in den Figuren rechten Rand der Ausnehmung 56 des hülsenförmigen Fortsatzes 48 gerät (siehe Fig. 4), wird auf den Anker 38 die auf das Eingangsglied 26 wirkende Rückstellkraft übertragen, die dazu ausreicht, den Anker 38 vom Permanentmagneten 40 wieder zu lösen. Der erste Ventilsitz 50 kommt daraufhin mit dem Ventildichtglied 52 In Berührung und verschiebt dieses entgegen der Betätigungsrichtung, wodurch der zweite Vendlsitz 54 geöffnet und eine Verbindung zwischen den Arbeitskammern 20, 20' und den Unterdruckkammern 18, 18' hergestellt wird (siehe Fig. 5). Die Arbeitskammern 20, 20' werden somit evakuiert und es stellt sich wieder der in Fig. 1 gezeigte Ausgangszustand ein.

Aus der vorstehenden Beschreibung ist ersichtlich, dass letztlich die Druckfeder 44 die Auslöseschwelle der Bremsassistentfunktion festlegt. Diese Auslöseschwelle darf nicht zu niedrig gewählt werden, da es sonst zu ungewollten Vollbremsungen kommen könnte, sie darf andererseits aber auch nicht zu hoch gewählt werden, damit es auch bei einem nicht so kräfdgen Fahrer im Rahmen einer Notbremsung zur gewünschten Auslösung der Bremsasslstentfunktion kommt.

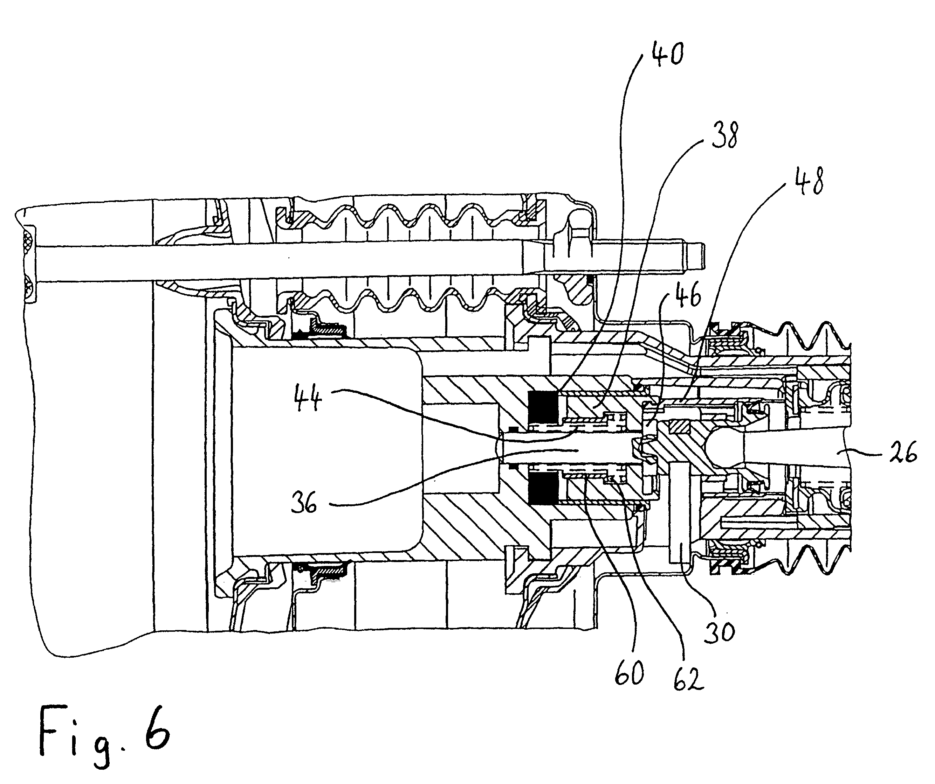

Bei dem Bremskraftverstärker 10 gemäß Fig. 6 ist zwischen dem Anker 38 und der den Kraftabgabestößel 36 umgebenden Druckfeder 44 eine koaxial zum Anker 38 und zum Kraftabgabestößel 36 angeordnete erfindungsgemäße Abstandshülse 60 vorhanden, die relativ zum Anker 38 verschiebbar ist. Eine axial zwischen dem Anker 38 und der Abstandshülse 60 eingekammerte Druckfeder 62 spannt die Abstandshülse 60 gegenüber dem Anker 38 derart vor, dass das freie Ende der Abstandshülse 60 in der in Fig. 6 wiedergegebenen Ruhestellung des Steuerventils 22 in Richtung des Permanentmagneten 40 aus dem Anker 38 axial hervorsteht.

Der Bremskraftverstärker gemäß Fig. 6 funktioniert prinzipiell wie in den Fign. 1 bis 5 skizziert, es ergibt sich jedoch folgender Vorteil: Solange die dem Permanentmagneten 40 zugewandte Stirnfläche der aus dem Anker 38 hervorragenden Abstandshülse 60 nicht mit dem Permanentmagneten 40 in Berührung ist, muss vom Benutzer des Bremskraftverstärkers 10 bei einer Betätigung desselben nur die Kraft der Druckfeder 44 überwunden werden. Erst wenn die Abstandshülse 60 den Permanentmagneten 40 berührt, und es anschließend zu einer weiteren Verschiebung des Ankers 38 In Betätigungsrichtung kommt, wirkt auch die Kraft der zweiten Druckfeder 62 zurück auf das Eingangsglied 26.

Bei der Anordnung gemäß Fig. 6 wird ein Teil der die Auslöseschwelle der Bremsassistentfunktion festlegenden federnden Vorspannung des Ankers 38 von der zweiten Druckfeder 62 übernommen. Das bedeutet, dass die Druckfeder 44 gegenüber dem Bremskraftverstärker von Fig. 1 schwächer ausgeführt ist, woraus sich bei Normalbremsungen niedrigere Betätigungskräfte ergeben. Mittels dieser Anordnung kann demnach die Auslöseschwelle der Bremsassistentfunktion in weiten Grenzen variiert werden, ohne dass sich die während einer Normalbremsung von einem Fahrer aufzubringende Betätigungskraft ändert.

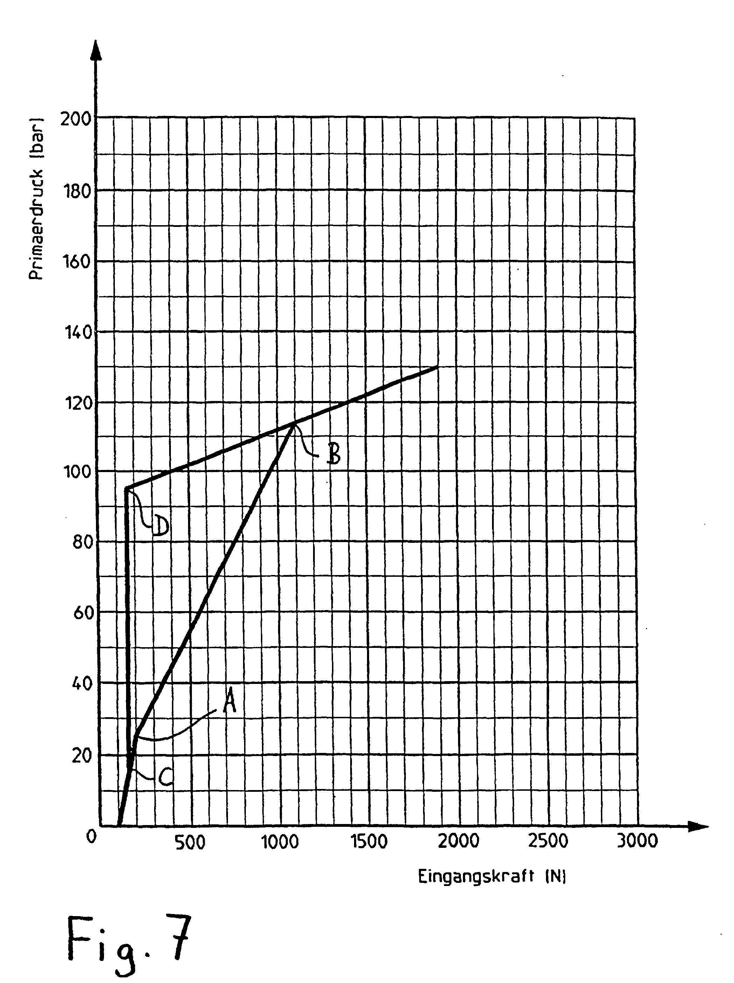

Fig. 7 zeigt die Funktion des Bremskraftverstärkers 10 in Form eines Diagramms. Aufgetragen ist die auf das Eingangsglied 26 ausgeübte Eingangskraft und ein sich daraus ergebender Hydraulikdruck in der Primärkammer des hier nicht dargestellten, dem Bremskraftverstärker 10 nachgeschalteten Hauptzylinders. Die über den Punkt A bis zu einem Aussteuerpunkt B des Bremskraftverstärkers 10 verlaufende Linie gibt dabei eine für eine Normalbremsung geltende, übliche Kennlinie einer Einheit aus einem Unterdruckbremskraftverstärker 10 und einem damit gekoppelten, hier nicht dargestellten hydraulischen Hauptzylinder wieder. Der Punkt C repräsentiert das Unterschreiten des zweiten Abstandes des Ankers 38 bezüglich des Permanentmagneten 40 im Rahmen einer Panikbremsung (Notbremsung), zu dem es bei einer schnell und mit größerem Hub erfolgenden Betätigung des Bremspedals kommt. Von dem Punkt C ab wird die Verstärkerkraft bis zu einem Aussteuerpunkt D des Bremskraftverstärkers 10 erhöht (Bremsassistentfünktion). Von dem Aussteuerpunkt D ab wirkt sich eine Zunahme der Betätigungskraft nur noch entsprechend der durch den hydraulisch wirksamen Durchmesser des Hauptzylinders gegebenen Kraftübersetzung aus, ohne dass der Bremskraftverstärker 10 einen weiteren Kraftbeitrag leistet.

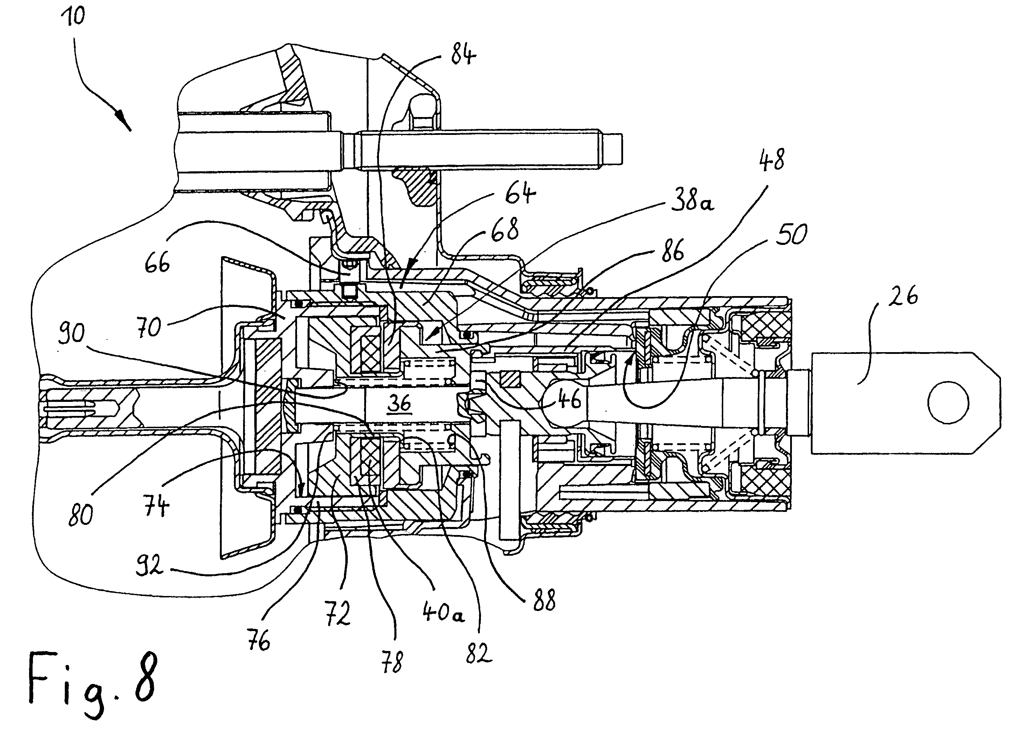

In Fig. 8 ist ein erstes erfindungsgemäßes Ausführungsbeispiel eines Bremskraftverstärkers 10 dargestellt, der gegenüber dem in Fig. 6 gezeigten eine noch weitergehende Verringerung der Ansprechkraft ermöglicht, die von einem Fahrer bei einer Normalbremsung überwunden werden muss.

Im Unterschied zu den beiden bereits erläuterten Bremskraftverstärkern weist der Bremskraftverstärker gemäß Fig. 8 ein Gehäuse 64 für die aus dem Anker 38a und dem Permanentmagneten 40a bestehende Magneteinrichtung auf. Das Magneteinrichtungsgehäuse 64 ist im Steuerventilgehäuse 24 mittels einer Schraube 66 fixiert und besteht aus einem topfförmigen Teil 68 und einem darin eingeschraubten und abgedichteten Deckel 70.

In dem durch das Gehäuse 64 gebildeten Innenraum sind der Anker 38a und der Permanentmagnet 40a angeordnet, durch die sich wie bei den ersten beiden Bremskraftverstärkern der Kraftabgabestößel 36 erstreckt Ein ebenfalls im Gehäuse 64 angeordnetes und im wesentlichen hohlzylindrisches Fesselungsbauteil 72 koppelt den Anker 38a und den Permanentmagneten 40a zu einer in dem Gehäuse 64 längs der Achse A verschiebbaren Einheit, deren Bewegung durch das Fesselungsbautell 72 geführt ist. Hierzu steht das Fesselungsbauteil 72 mit seiner Außenumfangsfläche In Gleitberührung mit einer entsprechenden inneren Fläche 74 eines hohlzylindrischen Fortsatzes 76, der sich vom Deckel 70 in das topfförmige Teil 68 des Magneteinrichtungsgehäuses 64 erstreckt.

Das Fesselungsbauteil 72 weist in seiner dem Anker 38a zugewandten Stirnfläche eine ringförmige Ausnehmung auf, in der ein im Querschnitt L-förmiger Magnethalter 78 aufgenommen ist, der seinerseits den ringförmigen Permanentmagneten 40a trägt. Radial innen erstreckt sich von dem Fesselungsbauteil 72 koaxial zur Achse A ein hülsenförmiger Fortsatz 80 am Magnethalter 78 und dem Permanentmagneten 40a vorbei bis in den hohlzylindrischen Anker 38a hinein. Am freien Ende dieses hohlzylindrischen Fortsatzes 80 ist ein radial nach außen stehender, umlaufender Kragen 82 ausgebildet, der eine ringförmige Magnetplatte 84 hintergreift, die mit einer im wesentlichen topfförmigen Basis 86 fest verbunden ist, mit der zusammen sie den Anker 38a bildet. Eine erste Druckfeder 88 stützt sich axial zwischen dem Kragen 82 des Fesselungsbauteils 72 und dem Boden der Basis 86 des Ankers 38a ab, so dass der mit dem Fesselungsbauteil 72 fest verbundene Permanentmagnet 40a und die mit der Basis 86 fest verbundene Magnetplatte 84 des Anker 38a in einem definierten axialen Abstand voneinander gehalten sind.

Eine zweite Druckfeder 90, die den Kraftabgabestößel 36 umgibt und einen kleineren Durchmesser als die erste Druckfeder 88 aufweist, stützt sich im Magneteinrichtungsgehäuse 64 mit ihrem einen Ende an einem hohlzylindrischen Anschlag 92 ab, der radial innerhalb des hohlzylindrischen Fortsatzes 76 vom Deckel 70 in das Gehäuse 64 ragt. Mit ihrem anderen Ende stützt sich die Druckfeder 90 am Boden der Basis 86 ab, die sich auf ihrer gegenüberliegenden Seite analog den ersten beiden Bremskraftverstärkern am Ringbund 46 des Kraftabgabestößels 36 abstützt. Die zweite Druckfeder 90 spannt somit die verschiebbare Einheit aus Anker 38a und Permanentmagnet 40a entgegen der Betätigungsrichtung des Bremskraftverstärkers 10 vor. Die Wegstrecke, um die die verschiebbare Einheit im Gehäuse 64 in Betätigungsrichtung verschoben werden kann, ist durch den axialen Abstand zwischen dem Anschlag 92 und dem Fesselungsbauteil 72 definiert.

Die Funktion des ersten Ausführungsbeispieles ist wie folgt: Eine Verschiebung des Eingangsgliedes 26 in Betätigungsrichtung wird von dem Übertragungskolben 28 auf den Kraftabgabestößel 36 und von diesem auf den Anker 38a, genauer gesagt auf dessen Basis 86 übertragen. Solage das Fesselungsbauteil 72 nicht an dem Anschlag 92 anliegt, führt eine Verschiebung des Eingangsgliedes 26 in Betätigungsrichtung zu einer gleich großen Verschiebung der Einheit aus Anker 38a und Permanentmagnet 40a im Magneteinrichtungsgehäuse 64 entgegen der Kraft der zweiten Druckfeder 90. Die erste Druckfeder 88 überträgt dabei die Verschiebung der Basis 86 auf das Fesselungsbauteil 72 ohne dabei selbst komprimiert zu werden, so dass der axiale Abstand zwischen der Magnetplatte 84 des Ankers 38a und dem Permanentmagneten 40a sich nicht ändert. Wie auch bei den beiden ersten Bremskraftverstärkern wird im Rahmen einer solchen Verschiebung der mit dem Anker 38a gekoppelte hülsenförmige Fortsatz 58 von dem Ventildichtglied 52 abgehoben, so dass Atmosphärendruck durch den jetzt offenen ersten Ventilsitz 50 in die Arbeitskammer 20 einströmen und der gewünschte Bremsdruckaufbau stattfinden kann.

Kommt es anstelle einer Normalbremsung zu einer Notbremsung, bei der der Fahrer das Eingangsglied 26 schnell und heftig betätigt, so wird der axiale Abstand zwischen dem Fesselungsbauteil 72 und dem hohlzylindrischen Anschlag 92 schnell überwunden werden. Sobald das Fesselungsbauteil 72 an dem Anschlag 92 anliegt, kann der Anker 38a entgegen der Kraft der Druckfedem 88 und 90 relativ zum Permanentmagneten 40 verschoben werden, so dass sich der Abstand zwischen dem Permanentmagneten 40a und der Magnetplatte 84 verringert. Wird bei dieser Annäherung der Magnetplatte 84 an den Permanentmagneten 40a der vorab festgelegte, zweite Abstand unterschritten, ist die Anziehungskraft des Permanentmagneten 40a auf den Anker 38a größer als die entgegengerichtete Kraft der beiden Druckfedern 88 und 90, so dass der Anker 38a sich von dem Ringbund 46 löst und in Anlage mit dem Permanentmagneten 40a gerät, wodurch wie bei den zuvor beschrieben Bremskraftverstärkern die Notbremsunterstützung des Bremskraftverstärkers 10 aktiviert ist.

Das Lösen der Notbremsunterstützung erfolgt analog den beiden ersten Bremskraftverstärkern.

Aus der vorangegangenen Schilderung der Funktionsweise des ersten Ausführungsbeispieles ist ersichtlich, dass während einer Normalbremsung hinsichtlich der Magneteinrichtung nur die Kraft der gegenüber der ersten Feder 88 deutlich schwächeren zweiten Feder 90 überwunden werden muss, während zur Auslösung der Notbremsunterstützung die Kraft beider Federn 88 und 90 überwunden werden muss. Auf diese Weise wird ein im Normalbremsbetrieb mit geringen Betätigungskräften feinfühlig ansprechender Bremskraftverstärker erreicht und zugleich sichergestellt, dass unbeabsichtigte Auslösungen der Notbremsunterstützung vermieden sind. Die zur Auslösung der Notbremsunterstützung erforderliche Überwindung der sich durch die erste Druckfeder 88 ergebenden höheren Ansprechkraft macht sich nicht störend bemerkbar, da diese erhöhte Ansprechkraft durch die in einer Notbremssituation schnelle und heftige Betätigungsweise des Bremskraftverstärkers 10 so schnell überwunden wird, dass sie vom Fahrer praktisch nicht wahrgenommen wird.

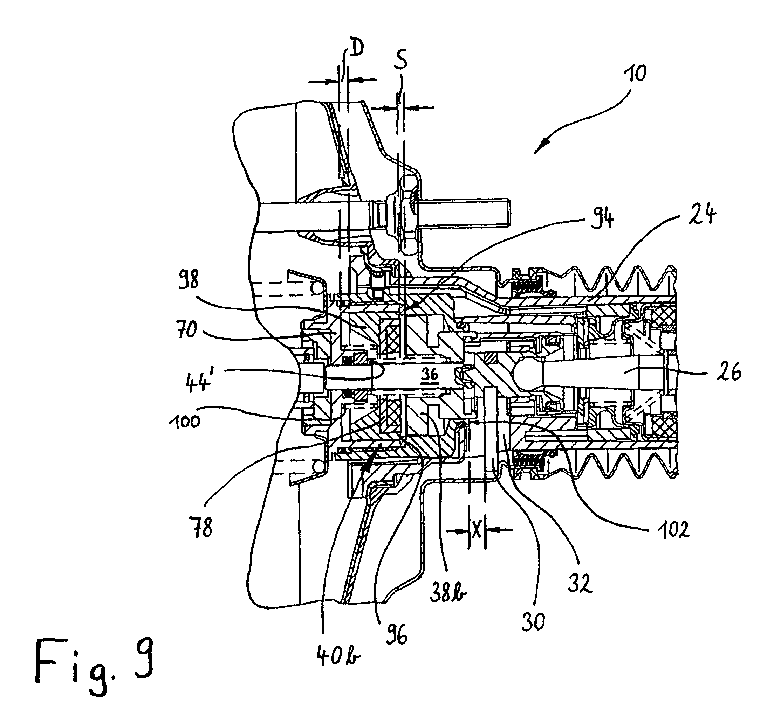

Fig. 9 zeigt ein zweites Ausführungsbeispiel des Bremskraftverstärkers 10, das sich von dem bisher gezeigten Ausführungsbeispiel durch einen in dem Steuerventilgehäuse 24 bzw. dem Magneteinrichtungsgehäuse 64 verschiebbar geführten und entgegen der Betätigungsrichtung federnd gegen einen Anschlag 94 vorgespannten Permanentmagneten 40b unterscheidet. Im Ausführungsbeispiel gemäß Fig. 9 ist der Anschlag 94 durch einen sich im Magneteinrichtungsgehäuse 64 abstützenden Anschlagring 96 gebildet, der den hier mit S bezeichneten, ersten Abstand zwischen dem Anker 38b und dem Permanentmagneten 40b festlegt. Durch Auswahl von Anschlagringen 96 mit unterschiedlicher Axialerstreckung läßt sich der Abstand S einstellen, beispielsweise um Fertigungstoleranzen auszugleichen.

Wie in Fig. 8 ist der Permanentmagnet 40b durch den Magnethalter 78 fixiert, der seinerseits in einem dem Fesselungsbauteil 72 ähnlichen Führungskörper 98 aufgenommen ist, der durch eine sich am Deckel 70 des Magneteinrichtungsgehäuses 64 abstützende Druckfeder 100 entgegen der Betätigungsrichtung des Bremskraftverstärkers 10 vorgespannt ist. Zwischen der vom Eingangsglied 26 abgewandten Stirnfläche des Führungskörpers 98 und dem Boden des Deckels 70 besteht in der gezeigten Ruhestellung ein Abstand D. Dieser Abstand ist beim gezeigten Ausführungsbeispiel so gewählt, dass die Summe der Abstände D und S zumindest geringfügig größer als ein Abstand X ist, den der Riegel 30 in seiner in Fig. 9 gezeigten Ruhestellung von einer Anschlagfläche 102 im Kanal 32 des Steuerventilgehäuses hat. Bei dem Abstand X handelt es sich demnach um denjenigen Hub, den das Eingangsglied 26 aus seiner Ruhestellung heraus relativ zum Steuerventilgehäuse 24 maximal durchlaufen kann. Durch die genannte Wahl der Abstände D, S und X ist sichergestellt, dass der Führungskörper 98 auch bei einer schnell und mit großer Kraft erfolgenden Betätigung des Eingangsgliedes 26 nicht in Kontakt mit dem Boden des Deckels 70 gerät. Im Gegensatz zu dem bisher beschriebenen Ausführungsbeispiel braucht die Magneteinrichtung daher keine Kräfte vom Eingangsglied 26 auf das Steuerventilgehäuse 24 zu übertragen und kann deshalb weniger stabil und damit leichter ausgestaltet werden.

Die Funktion des zweiten Ausführungsbeispieles ist ähnlich der Funktion des ersten Ausführungsbeispieles. In der in Fig. 9 wiedergegebenen Systemruhestellung sind der Anker 38b und der Permanentmagnet 40b durch den definierten Luftspalt S voneinander getrennt. Bei einer normalen Bremsung nähert sich der Anker 38b aufgrund der Bewegung des Eingangsgliedes 26 dem Permanentmagneten 40b an, wobei die den Anker 38b entgegen der Betätigungsrichtung vorspannende Feder 44' etwas komprimiert wird. Da das Steuerventilgehäuse 24 bei einer normalen Bremsung genügend Zeit hat, sich in das Bremskraftverstärkergehäuse 12 hinein zu verschieben (wobei die genannte Verschiebung wie üblich ausgelöst wird durch eine Belüftung der Arbeitskammer 20 mit Atmosphärendruck, woraufhin sich an der beweglichen Wand 16 die zur Verschiebung führende Druckdifferenz aufbaut), bleibt zwischen dem Anker 38b und dem Permanentmagneten 40b immer ein Restluftspalt S' < S bestehen, der ausreichend groß ist, um ein Inanlagekommen des Ankers 38b mit dem Permanentmagneten 40b zu vermeiden.

Bei einer sehr schnellen, panikartigen Betätigung des Eingangsgliedes 26 hingegen wird die Druckfeder 44' so weit komprimiert, dass der vorab festgelegte, zweite Abstand zwischen dem Anker 38b und dem Permanentmagneten 40b unterschritten wird, so dass der Anker 38b in Anlage an den Permanentmagenten 40b gezogen wird. Wie bei dem vorhergehenden Ausführungsbelspiel bereits beschrieben, ist damit die Notbremsunterstützung der Bremskraftverstärkers 10 aktiviert.

Das Lösen der Notbremsunterstützung erfolgt analog dem vorbeschriebenen Ausführungsbeispiel, d.h. das Eingangsglied 26 muss so weit entgegen der Betätigungsrichtung zurückbewegt werden, bis der Riegel 30 an einen mit dem hülsenförmigen Fortsatz 48 verbundenen Anschlagring 104 stößt. Erst dann wird über den hülsenförmigen Fortsatz 48 die auf das Eingangsglied 26 wirkende Rückstellkraft (siehe beispielsweise In Fig. 9 die Rückstellfeder 106) auf den Anker 38b übertragen, so dass dieser sich vom Permanentmagneten 40b löst.

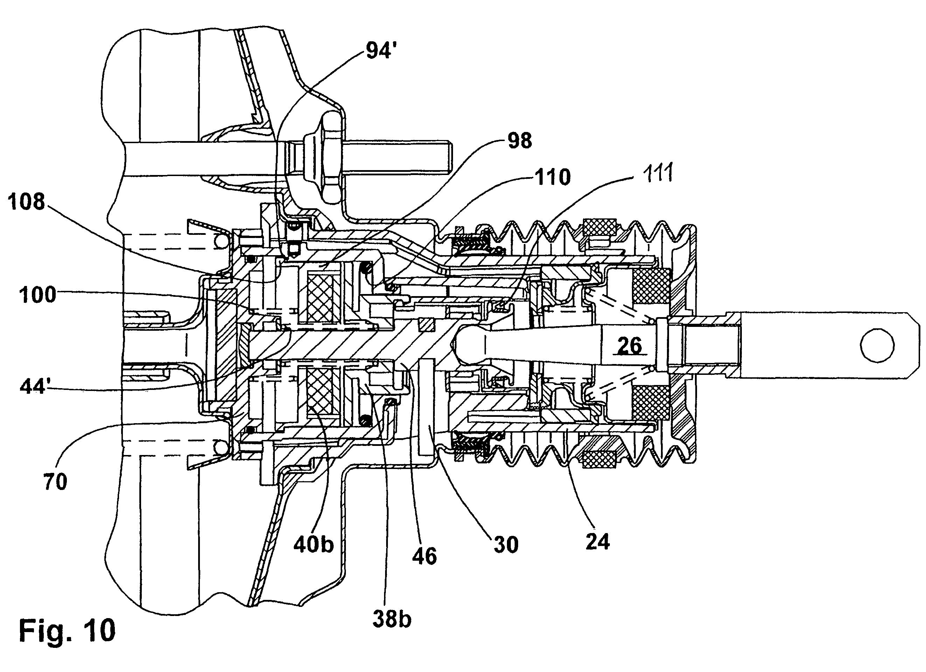

Das in Fig. 10 gezeigte, dritte Ausführungsbeispiel unterscheidet sich vom zweiten Ausführungsbeispiel im wesentlichen nur durch das Fehlen des Anschlagringes 96, dessen Funktion von einem als Gehäusestufe ausgebildeten Anschlag 94' übernommen wird, gegen den ein radial nach außen stehenden Anschlagbund 108 stößt, der an dem dem Deckel 70 benachbarten Ende des Führungskörpers 98 ausgebildet ist. Darüber hinaus ist zur Dämpfung der Rückkehrbewegung des Ankers 38b nach einem Lösen vom Permanentmagneten 40b ein O-Ring 110 aus Elastomermaterial wie dargestellt im Magneteinrichtungsgehäuse 64 angeordnet. Obwohl nicht dargestellt, kann ein solcher O-Ring auch bei den anderen Ausführungsbeispielen mit Vorteil verwendet werden. In der in Fig. 10 dargestellten Ruhestellung besteht wieder die durch den Ringbund 46 hergestellte, starre Kopplung des Eingangsgliedes 26 mit dem Anker 38b und der O-Ring 110 hat keinen Einfluß auf die Systemfunktion. Alternativ und/oder zusätzlich kann auch eine Dichtung 111 (siehe Fig. 10) so ausgestaltet sein, dass sie die Rückkehrbewegung des Ankers 38b dämpft. Beispielsweise kann die Dichtung 111 so ausgeführt sein, dass die zwischen ihr und dem hülsenförmigen Fortsatz 48 auftretende Reibung bei einer Bewegung des hülsenförmigen Fortsatzes 48 relativ zur Dichtung 111 nach rechts größer ist als bei einer Bewegung des hülsenförmigen Fortsatzes 48 in umgekehrter Richtung.

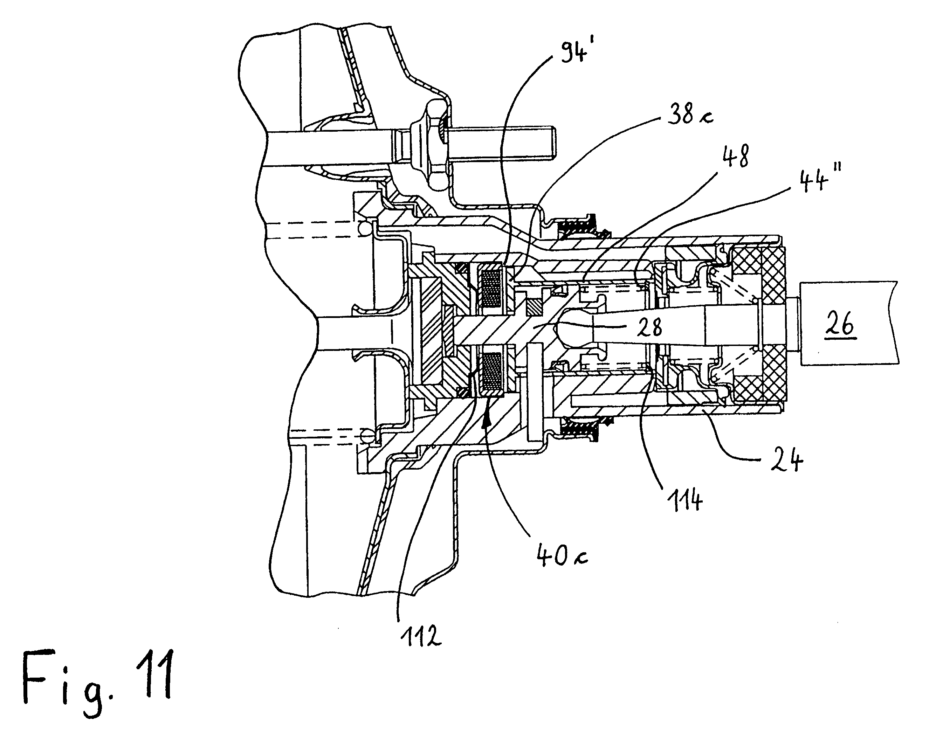

Fig. 11 schließlich zeigt ein konstruktiv vereinfachtes, viertes Ausführungsbeispiel, dessen Funktion dem zweiten und dritten Ausführungsbeispiel entspricht. Wie dargestellt, ist der Anker 38c gegenüber den zuvor beschriebenen Ausführungsbeispielen verkürzt worden und einstückig mit dem hülsenförmigen Fortsatz 48 ausgebildet. Auch die axiale Erstreckung des Permanentmagneten 40c bzw. der ihn aufnehmenden Bauteile ist gegenüber den vorangegangenen Ausführungsbeispielen verkürzt worden. Zur weiteren Verringerung der axialen Baulänge wird der Permanentmagnet 40c durch ein mehrere federnde Kreisringsegmente aufweisendes, insgesamt ringförmiges Federelement 112 entgegen der Betätigungsrichtung vorgespannt. Die den Anker 38c entgegen der Betätigungsrichtung vorspannende Druckfeder 44" ist in platzsparender Weise radial zwischen dem hülsenförmigen Fortsatz 48 und dem Eingangsglied 26 angeordnet und stützt sich wie dargestellt einerseits am hier einstückig mit dem Kraftabgabestößel 36 ausgebildeten Übertragungskolben 28 und andererseits an einem in dem hülsenförmigen Fortsatz 48 eingelassenen Ring 114 ab.

Die im folgenden beschriebenen Ausführungsbeispiele weisen weitere Funktionsmerkmale auf, die das Betriebsverhalten des Unterdruckbremskraftverstärkers 10 verbessern und/oder seine Herstellung vereinfachen. Der grundsätzliche Aufbau der folgenden Ausführungsbeispiele ähnelt dem Aufbau der in den Figuren 8 bis 11 gezeigten Ausführungsbeispiele, weshalb im folgenden nur auf abweichende konstruktive Details und die sich daraus ergebenden Funktionsunterschiede eingegangen wird.

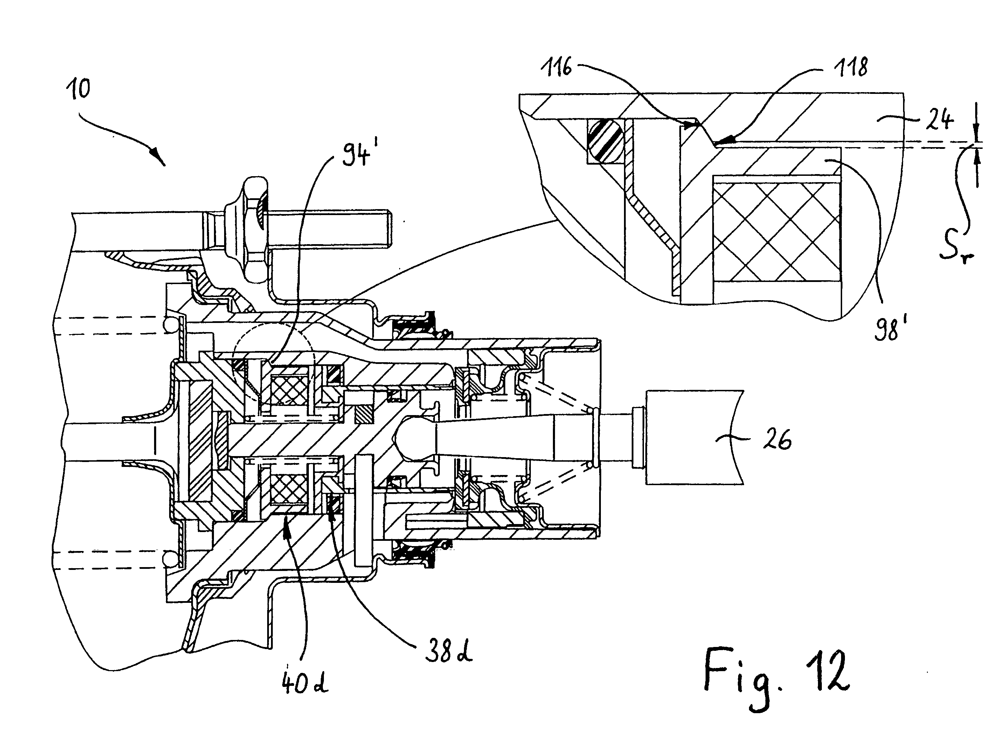

Bei denjenigen Ausgestaltungen des Bremskraftverstärkers 10, bei denen der Permanentmagnet 40b, 40c im Steuerventilgehäuse 24 verschiebbar ist und der erste Abstand zwischen dem Permanentmagnet und dem Anker durch einen Anschlag 94 oder 94' definiert wird (siehe Fig. 9, 10 und 11), kann es aufgrund von Fertigungstoleranzen dazu kommen, dass die einander zugewandten Flächen des Permanentmagneten 40b bzw. 40c und des Ankers 38b bzw. 38c, die zum Einschalten der Bremsassistentfunktion miteinander in Kontakt kommen sollen, zueinander nicht planparallel sind. Damit eine Schiefstellung des Permanentmagneten 40b bzw. 40c und/oder des Ankers 38b bzw. 38c vermieden wird, ist bei dem in Fig. 12 dargestellten fünften Ausführungsbeispiel der Anschlag 94' schräg zur Achse A ausgebildet, wobei entweder die am Steuerventilgehäuse 24 vorhandene Anschlagkontaktfläche 116 oder die am Führungskörper 98' vorhandene Anschlagkontaktfläche 118 oder auch beide Anschlagkontaktflächen 116, 118 eine ballige Gestalt haben. Des weiteren ist zwischen dem Führungskörper 98' und dem Steuerventilgehäuse 24 ein radiales Spiel Sᵣ vorhanden. Auf diese Weise kann sich der Permanentmagnet 40d bezüglich des Ankers 38d immer so ausrichten, dass die Kontaktflächen von Permanentmagnet 40d und Anker 38d planparallel zueinander sind.

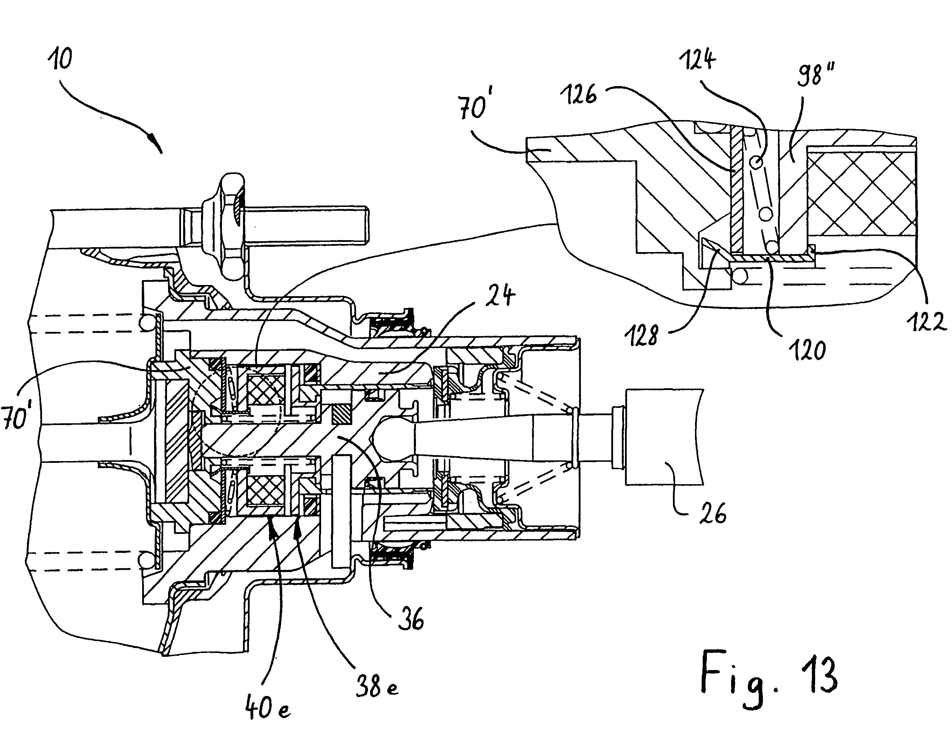

Dasselbe Ergebnis wird mit dem in Fig. 13 wiedergegebenen sechsten Ausführungsbeispiel erreicht. Dort ist eine zum Kraftabgabestößel 36 koaxiale Haltehülse 120 für den Permanentmagneten 40e vorgesehen, die an ihrem einen Ende einen Kragen 122 aufweist, gegen den der Führungskörper 98" von einer Feder 124 gedrückt wird, die sich an einer Ringscheibe 126 abstützt, die zwischen dem Steuerventilgehäuse 24 und dem Deckel 70' abdichtend eingeklemmt ist. An ihrem anderen Ende hat die Haltehülse 120 einen ballig aufgeweiteten, analog zum Anschlag 94' in Fig. 12 schräg angeordneten Halteflansch 128, der beispielsweise mittels Kugelaufweitung hergestellt ist und der es dem Permanentmagnet 40e ermöglicht, sich korrekt zum Anker 38e auszurichten. Sowohl beim fünften als auch beim sechsten Ausführungsbeispiel ist ein Verkippen des Permanentmagneten 40d bzw. 40e nur im Rahmen des zur Verfügung stehenden radialen Spiels S (in Fig. 13 nicht dargestellt) möglich.

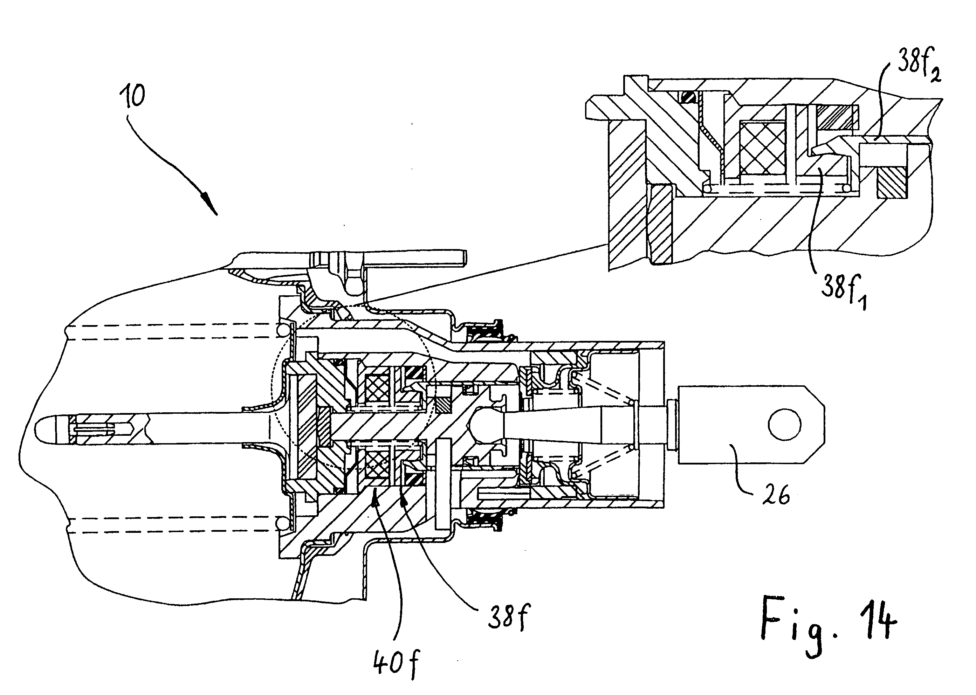

Eine alternative Möglichkeit zur planparallelen Ausrichtung der Kontaktflächen von Anker und Permanentmagnet zeigt das in Fig. 14 wiedergegebene siebte Ausführungsbeispiel. Der Anker 38f ist bei diesem Ausführungsbeispiel zweiteilig ausgeführt, wobei die Verbindung zwischen den beiden Teilen 38f₁ und 38f₂ nach Art eines Kugelgelenks ausgeführt ist, so dass das Teil 38f₁ relativ zum Teil 38f₂ in begrenztem Umfang verschwenkt werden kann. Zwischen dem radial äußeren Rand des Teiles 38f₁ und der Innenwand des Steuerventilgehäuses 24 besteht ein diese Verschwenkung ermöglichendes, hier nicht dargestelltes radiales Spiel.

Generell ist es wünschenswert, den in der Ruhestellung des Steuerventils 22 zwischen dem Anker und dem Permanentmagnet vorhandenen, ersten Abstand möglichst groß zu machen, damit in der Ruhestellung möglichst geringe Magnetkräfte auf den Anker wirken. Jede in der Ruhestellung auf den Anker wirkende Magnetkraft muss nämlich durch die im Steuerventil 22 vorhandenen Federn kompensiert werden, wodurch die Federkraft größer als eigentlich notwendig wird, was wiederum dazu führt, dass beim Betätigen des Steuerventils 22 mittels des Eingangsgliedes 26 eine höhere Kraft aufgebracht werden muss. Ein großer erster Abstand zwischen dem Anker und dem Permanentmagnet hat jedoch zur Folge, dass der Anker einen großen Weg in Richtung auf den Permanentmagnet überwinden muss, bevor der zweite Abstand unterschritten und dadurch die Bremsassistentfunktion ausgelöst wird. Der erste Abstand wird deshalb relativ klein gewählt, damit die gewünschte Bremsassistentfunktion bei Bedarf auch tatsächlich ausgelöst werden kann.

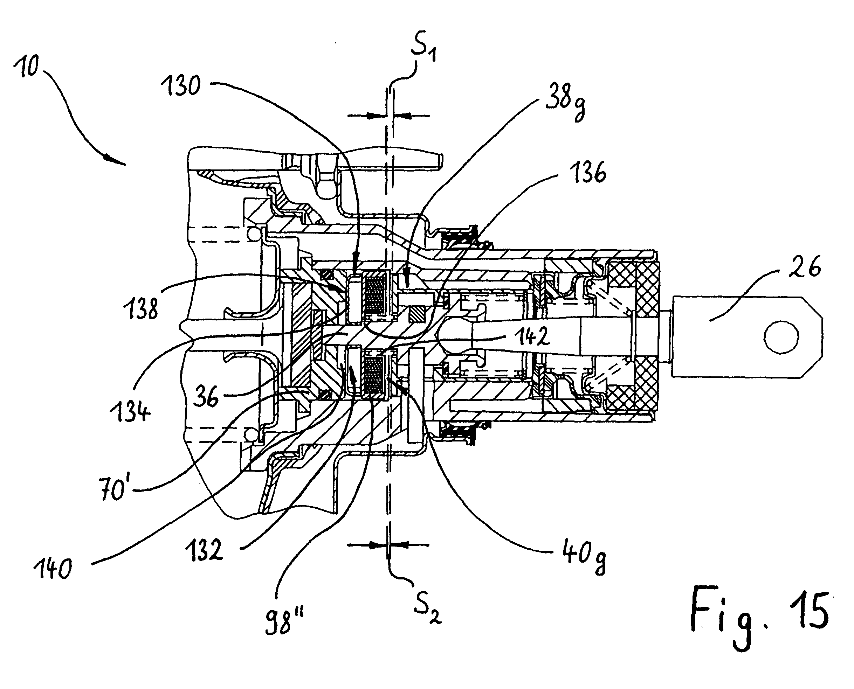

Das in den Figuren 15 bis 17 dargestellte, achte Ausführungsbeispiel weist zur Lösung des zuvor genannten Zielkonflikts eine Hebelanordnung 130 auf, die auf den Permanentmagnet 40g wirkt und den in Fig. 15 dargestellten ersten Abstand S₁ zwischen dem Permanentmagnet 40g und dem Anker 38g auf einem Abstand S₂ verkleinert, sobald das Steuerventil 22 bzw. der Bremskraftverstärker 10 betätigt wird. Der Abstand S₂ ist größer als der die Auslöseschwelle für die Bremsassistentfunktion festlegende zweite Abstand. Ausgehend von dem Abstand S₂ muss der Anker 38g also erst auf den Permanentmagnet 40g zubewegt werden, damit es - wie im Zusammenhang mit den vorhergehenden Ausführungsbeispielen beschrieben - bei Unterschreiten des zweiten Abstandes zwischen Anker 38g und Permanentmagnet 40g zum Auslösen der Bremsassistentfunktion kommt

Die Hebelanordnung 130 besteht im gezeigten Ausführungsbeispiel aus einem insgesamt ringförmigen Element 132, das aus mehreren Armen 134 besteht, die jeweils einen U-förmigen Querschnitt haben. Jeder Arm 134 stützt sich mit seinem radial inneren Ende an einer Stufe 136 des Kraftabgabestößels 36 und mit seinem radial äußeren Ende am Permanentmagnet 40g bzw. dessen Führungskörper 98" ab. Radial innen sind alle Arme 134 miteinander verbunden und bilden eine Öffnung, durch die sich der Kraftabgabestößel 36 erstreckt.

In der in Fig. 15 gezeigten Ruhestellung liegt das Element 132 mit seinem von den Armen 134 gebildeten Boden 138 an dem Deckel 70' an, der In der Mitte eine Ausnehmung 140 aufweist. Der Permanentmagnet 40g bzw. dessen Führungskörper 98" ist mittels einer sich am Kraftabgabestößel 36 abstützenden Feder 142 in Anlage mit dem Element 132 gedrückt.

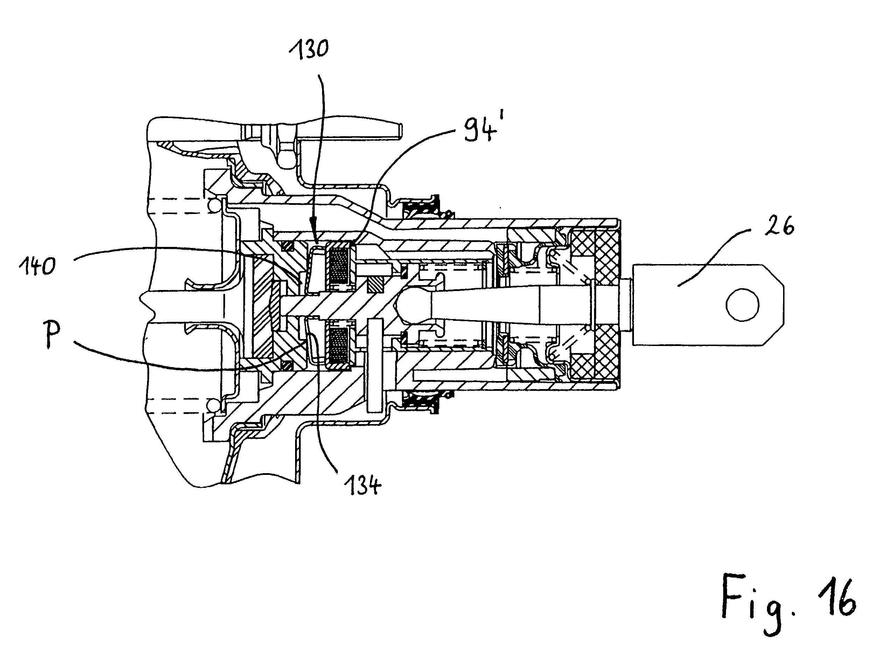

Wird nun der Bremskraftverstärker 10 betätigt, so verschiebt sich das Eingangsglied 26 und damit auch der Kraftabgabestößel 36 in das Steuerventilgehäuse 24 hinein. Die am Kraftabgabestößel 36 vorhandene Stufe 136 drückt das radial innere Ende jedes Armes 134 in die im Deckel 70' vorhandene Ausnehmung 140, woraufhin jeder Arm 134 um einen Drehpunkt P (siehe Fig. 16) kippt, der im Deckel 70' durch die Ausnehmung 140 gebildet ist. Die nach links gerichtete Bewegung der radial inneren Enden der Arme 134 bewirkt demnach eine gleich große, jedoch nach rechts gerichtete Bewegung der radial äußeren Enden der Arme 134, die auf den Permanentmagnet 40g übertragen wird und diesen unter Verkleinerung des ersten Abstandes S₁ auf S₂ gegen den im Steuerventilgehäuse 24 vorhandenen Anschlag 94' drückt. Aus dieser Stellung heraus kann dann die Bremsassistentfunktion zuverlässig ausgelöst werden (siehe Fig. 16).

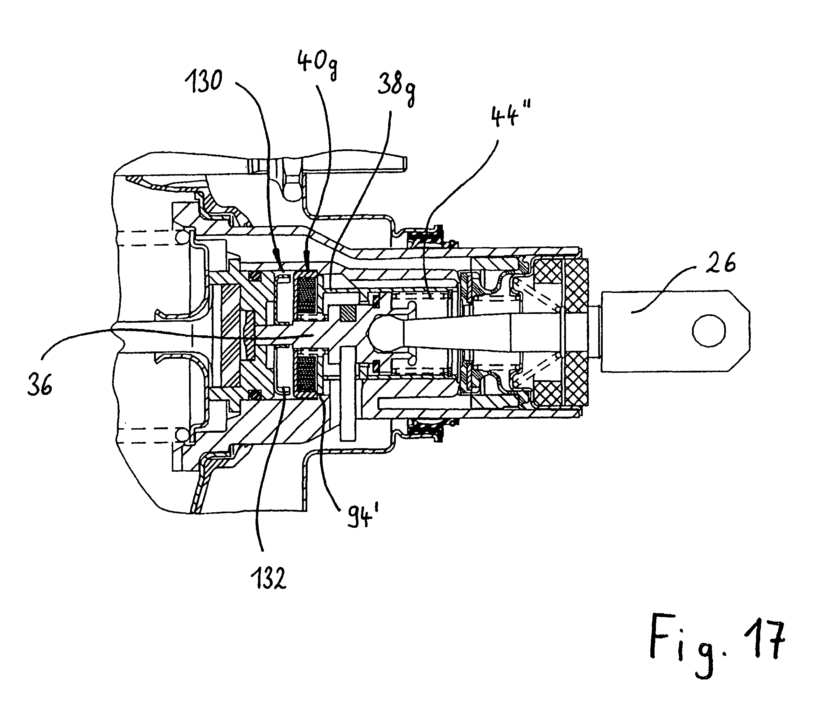

Beim Lösen der Bremse löst sich zunächst der Permanentmagnet 40g von dem Element 132, bleibt jedoch noch in Kontakt mit dem Anker 38g (siehe Fig. 17). Erst wenn bei einer weiteren Zurückbewegung des Eingangsgliedes 26 und des damit gekoppelten Kraftabgabestößels 36 sich die Feder 44" komprimiert, weil der Permanentmagnet 40g am Anschlag 94' anliegt und der Anker 38g noch in Kontakt mit dem Permanentmagnet 40g ist, erhöht sich die auf den Anker 38g wirkende Gegenkraft schließlich soweit, dass der Anker 38g vom Permanentmagnet 40g abreißt. Damit ist die Bremsassistentfunktion wieder ausgeschaltet.

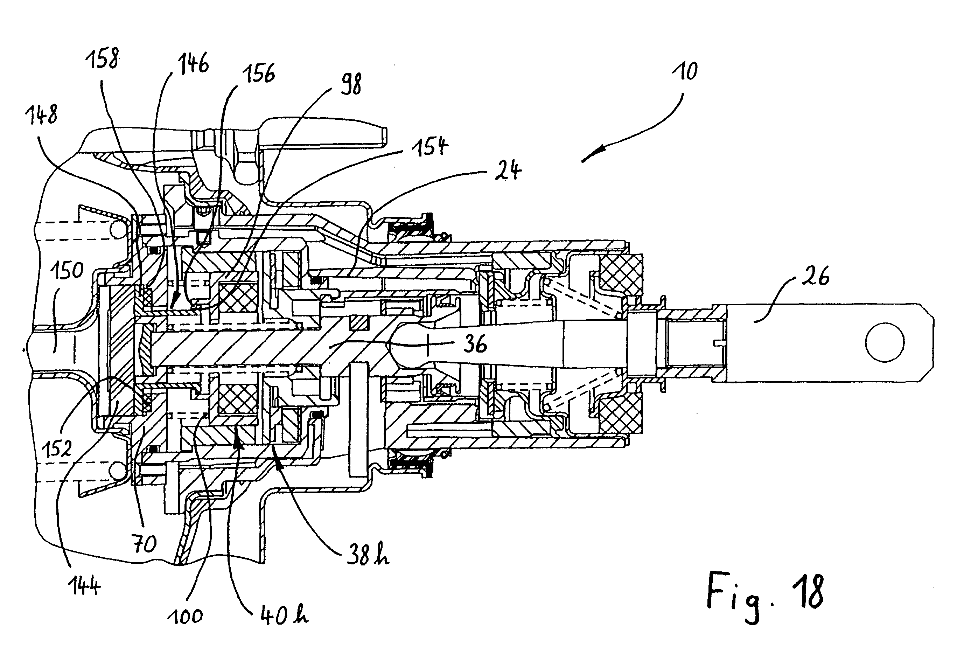

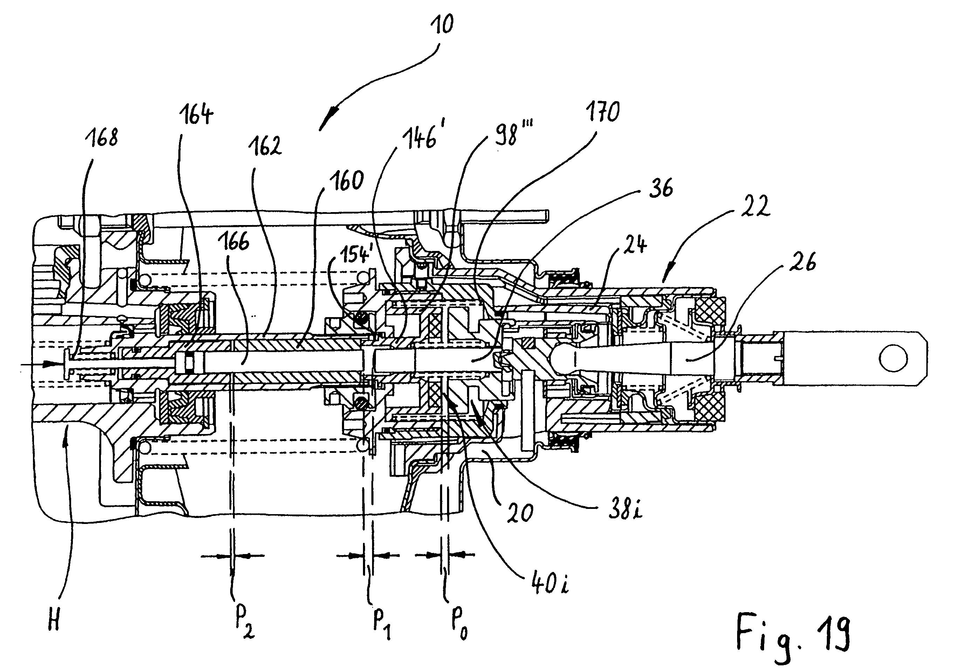

Die in den Figuren 18 und 19 dargestellten Ausführungsbeispiele umfassen eine Einrichtung, mit der der erste Abstand zwischen dem Anker und dem Permanentmagnet in Abhängigkeit einer auf den Bremskraftverstärker 10 zurückwirkenden Gegenkraft F verkleinert wird. Mit dieser Einrichtung soll erreicht werden, dass die von einem Fahrer zur Auslösung der Bremsassistentfunktion aufzubringende Arbeit (Verschiebung des Eingangsgliedes 26 bzw. des Kraftabgabestößes 36 multipliziert mit der dazu erforderlichen Kraft) unter allen Betriebsbedingungen im wesentlichen konstant bleibt. Aus der Ruhestellung heraus ist zur Verschiebung des Eingangsgliedes 26 eine nur geringe Arbeit erforderlich, denn in einem mit dem Bremskraftverstärker 10 verbundenen Hauptzylinder H (siehe Fig. 19) hat sich noch kein oder ein nur geringer Druck aufgebaut, so dass noch keine oder nur eine geringe Gegenkraft F über eine aus Elastomermaterial bestehende Reaktionsscheibe 144 auf den Kraftabgabestößel 36 zurückwirkt. Soll jedoch mitten in einer Bremsung die Bremsassistentfunktion ausgelöst werden, so erfordert dies normalerweise eine deutlich größere Arbeit, da das Eingangsglied 26 bzw. der Kraftabgabestößel 36 gegen einen nunmehr hohen Druck im Hauptzylinder und eine daraus resultierende, hohe Gegenkraft F verschoben werden muss, um den zweiten Abstand zwischen Anker und Permanentmagnet zu unterschreiten. Die genannte Einrichtung, die den ersten Abstand mit steigender Gegenkraft F kontinuierlich verkleinert, verhindert diese unerwünschte Zunahme der zur Auslösung der Bremsassistentfunktion unerwünschte Zunahme der zur Auslösung der Bremsassistentfunktion erforderlichen Arbeit.

Die genannte Einrichtung besteht gemäß dem in Fig. 18 wiedergegebenen neunten Ausführungsbeisplel aus einer Verstelihülse 146 mit einem Kragen 148, an dem die Reaktionsscheibe 144 anliegt, so dass die von einem Hauptzylinder über einen Stößel 150 zurückwirkende Gegenkraft F auf die Verstelihülse 146 übertragen wird. Die Verstellhülse 146 stützt sich im Ausführungsbeispiel gemäß Fig. 18 über ein federnd nachgiebiges Element, hier einen O-Ring 152, das zwischen dem Kragen 148 und dem Deckel 70 des Magneteinrichtungsgehäuses 64 angeordnet ist, am Magneteinrichtungsgehäuse 64 und über letzteres am Steuerventilgehäuse 24 ab. An ihrem dem Kragen 148 gegenüberliegenden Ende ist die Verstellhülse 146 mit einem radial nach außen stehenden Ringbund 154 versehen, der einen Formschluß mit einem entsprechend geformten, radial nach innen ragenden Ringbund 156 des Führungskörpers 98 bereitstellt. Die Feder 100 (siehe auch Fig. 10) spannt die Einheit aus Permanentmagnet 40h und Führungskörper 98 gegen den Ringbund 154 vor, der hier die Funktion des Anschlages 94 übernimmt.

Die Funktion ist wie folgt: Je höher die Gegenkraft F wird, desto mehr drückt sich der O-Ring 152 zusammen, und desto weiter wird demnach der Ringbund 154 in Richtung auf den Anker 38h bewegt. Die federnd gegen diesen Ringbund 154 vorgespannte Einheit aus Permanentmagnet 40h und Führungskörper 98 macht diese Bewegung mit, so dass der Permanentmagnet 40h sich mit zunehmender Gegenkraft F dem Anker 38h immer mehr annähert. Damit bei dieser Annäherung nicht unbeabsichtigt der zweite Abstand unterschritten wird, was zu einer ungewollten Auslösung der Bremsassistentfunktion führen würde, ist im Deckel 70 ein mit dem Kragen 148 der Verstellhülse 146 zusammenwirkender Anschlag 158 vorhanden, der die genannte Bewegung der Verstellhülse 146 auf ein sicheres Maß begrenzt.

Fig. 19 zeigt ein gegenüber Fig. 18 etwas abgewandeltes, zehntes Ausführungsbeispiel, bei dem keine Reaktionsscheibe 144 vorhanden ist. Im Unterschied zum Ausführungsbeispiel gemäß Fig. 18 ist die Verstellhülse 146' starr mit dem Permanentmagneten 40i verbunden; im gezeigten Ausführungsbeispiel ist die Verstellhülse 146' einstückig mit dem Führungskörper 98"' ausgeführt. Statt der Reaktionsscheibe 144 liegt eine Rückwirkungshülse 160 am freien Ende der Verstellhülse 146' an, die dazu dient, die aus dem Hauptzylinder H zurückwirkende Gegenkraft F auf die Verstellhülse 146' zu übertragen.

Die Funktion der in Fig. 19 gezeigten Anordnung ist wie folgt: Der bereits erwähnte Hauptzylinder H hat einen hohlzylindrischen Primärkolben 162, in dem ein Stufenkolben 164 abgedichtet geführt ist. In dem Stufenkolben 164 wiederum ist ein Stößel 166 abgedichtet geführt. Zwischen dem Primärkolben 162 und dem Stößel 166 ist die Rückwirkungshülse 160 angeordnet.

Eine Feder 168 spannt den Stößel 166 in Betätigungsrichtung vor. Dadurch ist in der in Fig. 19 gezeigten Ruhestellung der Stößel 166 in Anlage mit dem Stufenkolben 164 und des weiteren der Stufenkolben 164 in Anlage mit dem Primärkolben 162 gezogen. Zwischen dem Stößel 166 und dem Kraftabgabestößel 36 besteht in dieser Ruhestellung ein definiertes Spiel P₁, das kleiner als ein Abstand P₀ zwischen dem Anker 38i und dem Permanentmagnet 40i ist.

Bei einer Betätigung des hier nicht dargestellten Bremspedals, d.h. bei einer Verschiebung des Elngangsgliedes 26 nach links, wird zunächst das Spiel P₁ überwunden und eine Reaktionskraft am Bremspedal ist solange nicht spürbar, wie der Kraftabgabestößel 36 nicht am Stößel 166 anliegt. Auf diese Weise wird zu Beginn einer Bremsung mit geringer Kraft eine schnelle Öffnung des Atmosphärenventils im Steuerventil 22 erreicht (Atmosphärendruck strömt in die Arbeitskammer 20 ein).

Im weiteren Verlauf einer Bremsung baut sich im Hauptzylinder H Bremsdruck auf, der auf den Stufenkolben 164 und den Stößel 166 wirkt. Der Stufenkolben 164 bewegt sich daher, zusammen mit dem Stößel 166, entgegen der Betätigungsrichtung und überwindet dabei ein Spiel P₂, das in der Ruhestellung zwischen der Rückwirkungshülse 160 und dem Stufenkolben 164 vorhanden ist. Sobald dieses Spiel P₂ überwunden ist, wirkt der im Hauptzylinder H erzeugte Fluiddruck als Gegenkraft F über den Stufenkolben 164 und die Rückwirkungshülse 160 auf die Verstellhülse 146' zurück. Wenn die Gegenkraft F dazu ausreicht, eine den Permanentmagneten 40i entgegen der Betätigungsrichtung vorspannende Feder 170 zu komprimieren, beginnt sich der Abstand zwischen dem Permanentmagneten 40i und dem Anker 38i zu verkleinern. Ein an der Versbellhülse 146' ausgebildeter Ringbund 154' verhindert dabei die ungewollte Auslösung der Bremsassistentfunktion durch Unterschreiten des zweiten Abstandes zwischen Anker 38i und Permanentmagnet 40i.

## Patentansprüche

1. Unterdruckbremskraftverstärker (10), mit
- einer Unterdruckkammer (18) und einer davon durch eine bewegliche Wand (16) druckdicht getrennten Arbeitskammer (20), und
- einem Steuerventil (22), das ein mit der beweglichen Wand (16) kraftübertragend gekoppeltes Gehäuse (24) und einen darin angeordneten ersten Ventilsitz (50) aufweist, der zur Erzielung einer Druckdifferenz an der beweglichen Wand (16) die Zufuhr von zumindest Atmosphärendruck zur Arbeitskammer (20) in Abhängigkeit der Verschiebung eines Eingangsgliedes (26) des Bremskraftverstärkers (10) zu steuern vermag,
- einem mit einem Permanentmagneten (40, 40a, 40b, 40c) zusammenwirkenden Anker (38, 38a, 38b, 38c), der in dem Steuerventilgehäuse (24) angeordnet ist und der mit dem Eingangsglied (26) in Betätigungsrichtung starr gekoppelt ist, wobei
- der Anker (38, 38a, 38b, 38c) federnd entgegen der Betätigungsrichtung vorgespannt und in der Ausgangsstellung des Steuerventils (22) in einem ersten Abstand von dem Permanentmagneten (40, 40a, 40b, 40c) gehalten ist, und wobei
- der Anker (38, 38a, 38b, 38c) im Zuge einer Annäherung an den Permanentmagneten (40, 40a, 40b, 40c) bei Unterschreitung eines vorab festgelegten, zweiten Abstandes, der kleiner als der erste Abstand ist, von dem Permanentmagneten (40, 40a, 40b, 40c) entgegen der auf den Anker (38, 38a, 38b, 38c) wirkenden federnden Vorspannkraft unter Aufhebung seiner in Betätigungsrichtung starren Kopplung mit dem Eingangsglied (26) in Anlage mit dem Permanentmagneten (40, 40a, 40b, 40c) gezogen wird,
**dadurch gekennzeichnet, daß** der erste Ventilsitz (50) mit dem Eingangsglied (26) und starr mit dem Anker (38, 38a, 38b, 38c) gekoppelt ist und daß der Permanentmagnet (40b, 40c) im Steuerventilgehäuse (24) verschiebbar geführt ist.

2. Unterdruckbremskraftverstärker nach Anspruch 1,
**dadurch gekennzeichnet, daß** der genannte zweite Abstand durch die Größe der auf den Anker (38, 38a, 38b, 38c) wirkenden federnden Vorspannung festgelegt ist.

3. Unterdruckbremskraftverstärker nach Anspruch 2,
**dadurch gekennzeichnet, daß** ein relativ zum Anker (38) bewegbares Glied gegenüber dem Anker (38) derart federnd vorgespannt ist, daß es vom Anker (38) in Richtung des Permanentmagneten (40, 40b) hervorsteht und in der Ausgangsstellung des Steuerventils (22) den Permanentmagneten (40, 40b) nicht berührt, und daß die den genannten zweiten Abstand festlegende, federnde Vorspannung nur auf den Anker (38) wirkt, wenn sich das relativ zum Anker (38) bewegbare Glied im Zuge einer Betätigung an den Permanentmagneten (40, 40b) angelegt hat.

4. Unterdruckbremskraftverstärker nach Anspruch 3,
**dadurch gekennzeichnet, daß** der Anker (38) hohlzylindrisch und das relativ zum Anker (38) bewegbare Glied eine konzentrisch zum Anker (38) angeordnete Abstandshülse (60) ist.

5. Unterdrückbremskraftverstärker nach Anspruch 1,
**dadurch gekennzeichnet, daß** der Permanentmagnet (40b, 40c) entgegen der Betätigungsrichtung federnd gegen einen Anschlag (94) vorgespannt ist.

6. Unterdruckbremskraftverstärker nach einem der Ansprüche 1 bis 5,
**dadurch gekennzeichnet, daß** der Anschlag (94) und/oder die mit dem Anschlag (94) zusammenwirkende, dem Permanentmagnet (40b, 40c) zugeordnete Kontaktfläche (118) ballig ausgeformt ist/sind, und daß zwischen dem Permanentmagnet (40b, 40c) bzw. dessen Halterung und dem Steuerventilgehäuse (24) ein radiales Spiel besteht.

7. Unterdruckbremskraftverstärker nach einem der Ansprüche 1 bis 6,
**dadurch gekennzeichnet, daß** ein mehrere federnde Kreisringsegmente aufweisendes, insgesamt ringförmiges Federelement (112) den Permanentmagneten (40c) entgegen der Betätigungsrichtung vorspannt.

8. Unterdruckbremskraftverstärker nach einem der Ansprüche 1 bis 7,
**dadurch gekennzeichnet, daß** der Anschlag (94) durch einen sich im Steuerventilgehäuse (24) abstützenden, insbesondere aus Kunststoff bestehenden Anschlagring (96) gebildet ist, dessen Axialerstreckung den genannten ersten Abstand festlegt.

9. Unterdruckbremskraftverstärker nach einem der Ansprüche 1 bis 8,
**dadurch gekennzeichnet, daß** der Permanentmagnet (40b, 40c) in Betätigungsrichtung relativ zum Steuerventilgehäuse (24) um eine Strecke verschiebbar ist, die größer als der maximal mögliche Betätigungshub des Eingangsgliedes (26) abzüglich des genannten ersten Abstandes ist.

10. Unterdruckbremskraftverstärker nach einem der Ansprüche 1, bis 9,
**dadurch gekennzeichnet, daß** der Anker (38a) und der Permanentmagnet (40a) durch ein Fesselungsbauteil (72), das eine Annäherung des Ankers (38a) an den Permanentmagneten (40a) zuläßt, miteinander zu einer verschiebbaren Einheit gekoppelt sind, und daß die den genannten zweiten Abstand festlegende, federnde Vorspannung nur dann auf den Anker (38a) wirkt, wenn die verschiebbare Einheit aus Anker (38a) und Permanentmagnet (40a) an einem Anschlag (92) anliegt, der ihre Verschiebung in Betätigungsrichtung verhindert.

11. Unterdruckbremskraftverstärker nach Anspruch 10,
**dadurch gekennzeichnet, daß** die verschiebbare Einheit aus Anker (38a) und Permanentmagnet (40a) in einem Magneteinrichtungsgehäuse (64) geführt ist, das im Steuerventilgehäuse (24) fixiert ist und das den Anschlag (92) bereitstellt.

12. Unterdruckbremskraftverstärker nach Anspruch 10 oder 11,
**dadurch gekennzeichnet, daß** eine erste Feder (88) den Anker (38a) und den Permanentmagneten (40a) voneinander weg vorspannt, daß eine zweite Feder (90) die verschiebbare Einheit aus Anker (38a) und Permanentmagnet (40a) entgegen der Betätigungsrichtung vorgespannt, und daß die gemeinsame Kraft beider Federn (88, 90) den genannten zweiten Abstand festlegt.

13. Unterdruckbremskraftverstärker nach Anspruch 12,
**dadurch gekennzeichnet, daß** die erste Feder (88) axial zwischen dem Anker (38a) und dem Fesselungsbauteil (72) eingespannt ist.

14. Unterdruckbremskraftverstärker nach Anspruch 12 oder 13,
**dadurch gekennzeichnet, daß** die zweite Feder (90) sich mit ihrem einen Ende am Anschlag (92) und mit ihrem anderen Ende am Anker (38a) abstützt und insbesondere koaxial zur ersten Feder (88) angeordnet ist.

15. Unterdruckbremskraftverstärker nach einem der Ansprüche 10 bis 14,
**dadurch gekennzeichnet, daß** der Permanentmagnet (40a) in dem Fesselungsbauteil (72) aufgenommen ist.

16. Unterdruckbremskraftverstärker nach einem der Ansprüche 10 bis 15,
**dadurch gekennzeichnet, daß** der Anker (38a) aus einer Basis (86) und einer damit verbundenen, dem Permanentmagneten (40a) zugewandten Magnetplatte (84) besteht, die insbesondere ringförmig ist.

17. Unterdruckbremskraftverstärker nach einem der vorhergehenden Ansprüche,
**dadurch gekennzeichnet, daß** der erste Ventilsitz (50) über den Anker (38, 38a, 38b, 38c) mit dem Eingangsglied (26) in Betätigungsrichtung starr gekoppelt ist.

18. Unterdruckbremskraftverstärker nach einem der vorhergehenden Ansprüche,
**dadurch gekennzeichnet, daß** der erste Ventilsitz (50) an einem mit dem Anker (38, 38a, 38b, 38c) starr verbundenen, insbesondere hülsenförmigen Fortsatz (48) ausgebildet ist.

19. Unterdruckbremskraftverstärker nach Anspruch 18,
**dadurch gekennzeichnet, daß** mit dem Eingangsglied (26) ein Riegel (30) starr verbunden ist, der in eine Ausnehmung (56) des Fortsatzes (48) reicht, an dem der erste Ventilsitz (50) ausgebildet ist, und daß das Spiel des Riegels (30) in dieser Ausnehmung (56) in Verschieberichtung des Eingangsgliedes (26) kleiner als der maximal mögliche Betätigungshub des Eingangsgliedes (26) ist.

20. Unterdruckbremskraftverstärker nach einem der vorhergehenden Ansprüche,
**dadurch gekennzeichnet, daß** das Eingangsglied (26) federnd entgegen der Betätigungsrichtung vorgespannt ist.

21. Unterdruckbremskraftverstärker nach einem der vorhergehenden Ansprüche,
**dadurch gekennzeichnet, daß** die nach einem Lösen von dem Permanentmagneten (40, 40a, 40b, 40c) erfolgende Rückhubbewegung des Ankers (38, 38a, 38b, 38c) durch ein Elastomerelement gedämpft ist, insbesondere durch einen O-Ring (110).

22. Unterdruckbremskraftverstärker nach einem der Ansprüche 1 bis 21,
**dadurch gekennzeichnet, daß** der genannte erste Abstand zwischen dem Anker (38h, 38i) und dem Permanentmagneten (40h, 40i) sich in Abhängigkeit einer auf den Unterdruckbremskraftverstärker entgegen seiner Betätigungsrichtung einwirkenden Gegenkraft (F) verkleinert.

23. Unterdruckbremskraftverstärker nach Anspruch 22,
**dadurch gekennzeichnet, daß** der Permanentmagnet (40h; 40i) mit einer Verstellhülse (146; 146') verbunden ist, auf die die Gegenkraft (F) wirkt.

24. Unterdruckbremskraftverstärker nach Anspruch 23,
**dadurch gekennzeichnet, daß** die Verstellhülse (146') mit dem Permanentmagneten (40i) starr verbunden ist.

25. Unterdruckbremskraftverstärker nach Anspruch 24,
**dadurch gekennzeichnet, daß** die Verstellhülse (146') einen Anschlag (154') aufweist, der mit dem Gehäuse (24) des Steuerventils (22) zusammenwirkt und die Verkleinerung des genannten ersten Abstandes begrenzt.

26. Unterdruckbremskraftverstärker nach Anspruch 25,
**dadurch gekennzeichnet, daß** eine Rückwirkungshülse (160) die Gegenkraft (F) auf die Verstellhülse (146') überträgt.

27. Unterdruckbremskraftverstärker nach Anspruch 23 oder 24,
**dadurch gekennzeichnet, daß** die Verstellhülse (146) sich in Betätigungsgegenrichtung über ein federnd nachgiebiges Element (152) am Gehäuse (24) des Steuerventils (22) abstützt.

28. Unterdruckbremskraftverstärker nach einem der Ansprüche 23 bis 25,
**dadurch gekennzeichnet, daß** an der Verstellhülse (146) ein Anschlag (Ringbund 154) ausgebildet ist, gegen den der Permanentmagnet (40h) entgegen der Betätigungsrichtung federnd vorgespannt ist.

29. Unterdruckbremskraftverstärker nach einem der Ansprüche 23 bis 25 oder 27,
**dadurch gekennzeichnet, daß** eine Reaktionsscheibe (144) aus Elastomermaterial die Gegenkraft (F) auf die Verstellhülse (146) überträgt.

30. Unterdruckbremskraftverstärker nach einem der Ansprüche 1 bis 29,
**dadurch gekennzeichnet, daß** eine auf den Permanentmagnet (40g) wirkende Hebelanordnung (130) den genannten ersten Abstand zwischen dem Anker (38g) und dem Permanentmagneten (40g) bei einer Betätigung des Steuerventils (22) verkleinert, ohne den genannten zweiten Abstand zwischen dem Anker (38g) und dem Permanentmagnet (40g) zu unterschreiten.

31. Unterdruckbremskraftverstärker nach Anspruch 30,
**dadurch gekennzeichnet, daß** der Permanentmagnet (40g) federnd in Anlage mit der Hebelanordnung (130) vorgespannt ist.

32. Unterdruckbremskraftverstärker nach Anspruch 30 oder 31,
**dadurch gekennzeichnet, daß** der Permanentmagnet (40g) bei einer Betätigung des Steuerventils (22) von der Hebelanordnung (130) gegen den Anschlag (94) gedrückt wird.

33. Unterdruckbremskraftverstärker nach einem der Ansprüche 30 bis 32,
**dadurch gekennzeichnet, daß** die Hebelanordnung (130) sich einerseits am Kraftabgabestößel (36) und andererseits am Permanentmagnet (40g) abstützt, und daß das Steuerventilgehäuse (24) einen Drehpunkt (P) für die Hebelanordnung (130) bildet.

34. Unterdruckbremskraftverstärker nach Anspruch 33,
**dadurch gekennzeichnet, daß** die Hebelanordnung (130) ein insgesamt ringförmiges, aus mehreren jeweils einen U-förmigen Querschnitt aufweisenden und sich radial erstreckenden Armen (134) gebildetes Element (132) ist, dessen Arme (134) radial innen miteinander verbunden sind.

## Claims

1. Vacuum brake booster (10), comprising
- a vacuum chamber (18) and a working chamber (20) separated from one another in a pressure-proof manner by a movable wall (16), and
- a control valve (22), which comprises a housing (24) workingly coupled to the movable wall (16) and contains a first valve seat (50), which is disposed in said housing and to achieve a pressure difference at the movable wall (16) is capable of controlling the supply of at least atmospheric pressure to the working chamber (20) in dependence upon the displacement of an input element (26) of the brake booster (10),
- an armature (38, 38a, 38b, 38c), which cooperates with a permanent magnet (40, 40a, 40b, 40c) and is disposed in the control valve housing (24) and is rigidly coupled to the input element (26) in actuating direction, wherein
- the armature (38, 38a, 38b, 38c) is resiliently preloaded counter to actuating direction and in the starting position of the control valve (22) is held at a first distance from the permanent magnet (40, 40a, 40b, 40c), and wherein
- the armature (38, 38a, 38b, 38c), as it approaches the permanent magnet (40, 40a, 40b, 40c) and is less than a previously defined second distance away, which is smaller than the first distance, is pulled by the permanent magnet (40, 40a, 40b, 40c) counter to the resilient preloading force acting upon the armature (38, 38a, 38b, 38c), with simultaneous cancellation of its, in actuating direction, rigid coupling to the input element (26), into contact with the permanent magnet (40, 40a, 40b, 40c),
**characterised in that** the first valve seat (50) is coupled to the input element (26) and rigidly to the armature (38, 38a, 38b, 38c) and that the permanent magnet (40b, 40c) is guided displaceably in the control valve housing (24).

2. Vacuum brake booster according to claim 1,
**characterised in that** the said second distance is defined by the magnitude of the resilient preloading force acting upon the armature (38, 38a, 38b, 38c).

3. Vacuum brake booster according to claim 2,
**characterised in that** an element, which is movable relative to the armature (38), is resiliently preloaded relative to the armature (38) in such a way that it projects from the armature (38) in the direction of the permanent magnet (40, 40b) and in the starting position of the control valve (22) is not in contact with the permanent magnet (40, 40b), and that the resilient preloading force, which defines the said second distance, acts upon the armature (38) only when the element movable relative to the armature (38) has, in the course of an actuating process, been applied against the permanent magnet (40, 40b).

4. Vacuum brake booster according to claim 3,
**characterised in that** the armature (38) is hollow-cylindrical and the element movable relative to the armature (38) is a spacer sleeve (60), which is disposed concentrically with the armature (38).

5. Vacuum brake booster according to claim 1,
**characterised in that** the permanent magnet (40b, 40c) is resiliently preloaded counter to actuating direction against a stop (94).

6. Vacuum brake booster according to one of claims 1 to 5,
**characterised in that** the stop (94) and/or the contact face (118) cooperating with the stop (94) and associated with the permanent magnet (40b, 40c) is/are crowned, and that there is a radial play between the permanent magnet (40b, 40c) and/or its mounting and the control valve housing (24).

7. Vacuum brake booster according to one of claims 1 to 6,
**characterised in that** an, on the whole, annular spring element (112) comprising a plurality of resilient segments of a circle preloads the permanent magnet (40c) counter to actuating direction.

8. Vacuum brake booster according to one of claims 1 to 7,
**characterised in that** the stop (94) is formed by a stop ring (96) made in particular of plastics material, which is supported in the control valve housing (24) and the axial extension of which defines the said first distance.

9. Vacuum brake booster according to one of claims 1 to 8,
**characterised in that** the permanent magnet (40b, 40c) is displaceable in actuating direction relative to the control valve housing (24) by a distance which is greater than the maximum possible actuating stroke of the input element (26) minus the said first distance.

10. Vacuum brake booster according to one of claims 1 to 9,
**characterised in that** the armature (38a) and the permanent magnet (40a) are coupled together to form a displaceable unit by means of a fettering component (72), which allows a convergence of the armature (38a) with the permanent magnet (40a), and that the resilient preloading force defining the said second distance acts upon the armature (38a) only when the displaceable unit of armature (38a) and permanent magnet (40a) rests against a stop (92) which prevents its displacement in actuating direction.

11. Vacuum brake booster according to claim 10,
**characterised in that** the displaceable unit of armature (38a) and permanent magnet (40a) is guided in a magnetic device housing (64) which is fixed in the control valve housing (24) and provides the stop (92).

12. Vacuum brake booster according to claim 10 or 11,
**characterised in that** a first spring (88) preloads the armature (38a) and the permanent magnet (40a) away from one another, that a second spring (90) preloads the displaceable unit of armature (38a) and permanent magnet (40a) counter to actuating direction, and that the joint force of both springs (88, 90) defines the said second distance.

13. Vacuum brake booster according to claim 12,
**characterised in that** the first spring (88) is clamped axially between the armature (38a) and the fettering component (72).

14. Vacuum brake booster according to claim 12 or 13,
**characterised in that** the second spring (90) is supported by its one end against the stop (92) and by its other end against the armature (38a) and is disposed in particular coaxially with the first spring (88).

15. Vacuum brake booster according to one of claims 10 to 14,
**characterised in that** the permanent magnet (40a) is accommodated in the fettering component (72).

16. Vacuum brake booster according to one of claims 10 to 15,
**characterised in that** the armature (38a) comprises a base (86) and an, in particular, annular magnetic plate (84), which is connected to said base and faces the permanent magnet (40a).

17. Vacuum brake booster according to one of the preceding claims,
**characterised in that** the first valve seat (50) is rigidly coupled in actuating direction to the input element (26) via the armature (38, 38a, 38b, 38c).

18. Vacuum brake booster according to one of the preceding claims,
**characterised in that** the first valve seat (50) is formed on an, in particular, sleeve-shaped extension (48) rigidly connected to the armature (38, 38a, 38b, 38c).

19. Vacuum brake booster according to claim 18,
**characterised in that** rigidly connected to the input element (26) is a locking bar (30) extending into a recess (56) of the extension (48) on which the first valve seat (50) is formed, and that the play of the locking bar (30) in said recess (56) in the direction of displacement of the input element (26) is smaller than the maximum possible actuating stroke of the input element (26).

20. Vacuum brake booster according to one of the preceding claims,
**characterised in that** the input element (26) is resiliently preloaded counter to actuating direction.

21. Vacuum brake booster according to one of the preceding claims,
**characterised in that** the return stroke movement of the armature (38, 38a, 38b, 38c) occurring after its detachment from the permanent magnet (40, 40a, 40b, 40c) is damped by an elastomeric element, in particular by an O-ring (110).

22. Vacuum brake booster according to one of claims 1 to 21,
**characterised in that** the said first distance between the armature (38h, 38i) and the permanent magnet (40h, 40i) is reduced in dependence upon a counterforce (F) acting upon the vacuum brake booster counter to its actuating direction.

23. Vacuum brake booster according to claim 22,
**characterised in that** the permanent magnet (40h; 40i) is connected to an adjusting sleeve (146; 146') upon which the counterforce (F) acts.

24. Vacuum brake booster according to claim 23,
**characterised in that** the adjusting sleeve (146') is rigidly connected to the permanent magnet (40i).

25. Vacuum brake booster according to claim 24,
**characterised in that** the adjusting sleeve (146') comprises a stop (154') which cooperates with the housing (24) of the control valve (22) and limits the reduction of the said first distance.

26. Vacuum brake booster according to claim 25,
**characterised in that** a reaction sleeve (160) transmits the counterforce (F) to the adjusting sleeve (146').

27. Vacuum brake booster according to claim 23 or 24,
**characterised in that** the adjusting sleeve (146) bears counter to actuating direction via a resiliently compliant element (152) against the housing (24) of the control valve (22).

28. Vacuum brake booster according to one of claims 23 to 25,
**characterised in that** formed on the adjusting sleeve (146) is a stop (annular collar 154), towards which the permanent magnet (40h) is resiliently preloaded counter to actuating direction.

29. Vacuum brake booster according to one of claims 23 to 25 or 27,
**characterised in that** a reaction disk (144) of elastomeric material transmits the counterforce (F) to the adjusting sleeve (146).

30. Vacuum brake booster according to one of claims 1 to 29,
**characterised in that** a lever arrangement (130) acting upon the permanent magnet (40g) reduces the said first distance between the armature (38g) and the permanent magnet (40g) upon operation of the control valve (22), without undershooting the said second distance between the armature (38g) and the permanent magnet (40g).

31. Vacuum brake booster according to claim 30,
**characterised in that** the permanent magnet (40g) is preloaded resiliently into contact with the lever arrangement (130).

32. Vacuum brake booster according to claim 30 or 31,
**characterised in that** upon actuation of the control valve (22) the lever arrangement (130) presses the permanent magnet (40g) against the stop (94).

33. Vacuum brake booster according to one of claims 30 to 32,
**characterised in that** the lever arrangement (130) is supported on the one hand against the power output tappet (36) and on the other hand against the permanent magnet (40g), and that the control valve housing (24) forms a fulcrum (P) for the lever arrangement (130).

34. Vacuum brake booster according to claim 33,
**characterised in that** the lever arrangement (130) is an, on the whole, annular element (132) formed by a plurality of radially extending arms (134), which are in each case U-shaped in cross section and are connected to one another radially at the inside.

## Revendications

1. Dispositif servofrein à dépression (10) comportant
- une chambre à dépression (18) et une chambre de travail (20) séparée de celle-ci, de manière étanche à la pression, par une paroi mobile (16), et
- une soupape de commande (22) qui présente un carter (24) couplé, en transmission de force, avec la paroi mobile (16) et disposé dans celui-ci un premier siège de soupape (50), lequel, pour obtenir une différence de pression sur la paroi mobile (16), permet de commander l'amenée au moins de pression atmosphérique à la chambre de travail (20) en fonction du déplacement d'un élément d'entrée (26) du dispositif servofrein (10),
- un induit (38, 38a, 38b, 38c) coopérant avec un aimant permanent (40, 40a, 40b, 40c), qui est disposé dans le carter (24) de la soupape de commande et qui est couplé solidairement avec l'élément d'entrée (26) dans le sens d'actionnement,
- l'induit (38, 38a, 38b, 38c) étant précontraint élastiquement à l'encontre du sens d'actionnement et, dans la position initiale de la soupape de commande (22), étant maintenu à une première distance par rapport à l'aimant permanent (40, 40a, 40b, 40c), et
- l'induit (38, 38a, 38b, 38c), au cours de son rapprochement de l'aimant permanent (40, 40a, 40b, 40c), lors du passage en dessous d'une deuxième distance par rapport à l'aimant permanent (40, 40a, 40b, 40c), prédéterminée et inférieure à la première distance, étant tiré en appui contre l'aimant permanent (40, 40a, 40b, 40c), à l'encontre de la force de précontrainte agissant élastiquement sur l'induit (38, 38a, 38b, 38c), avec suppression de son couplage solidaire avec l'élément d'entrée (26) dans le sens d'actionnement,
**caractérisé en ce que** le premier siège de soupape (50) est couplé avec l'élément d'entrée (26) et solidairement avec l'induit (38, 38a, 38b, 38c) et **en ce que** l'aimant permanent (40b, 40c) est guidé en translation dans le carter (24) de la soupape de commande.

2. Dispositif servofrein à dépression selon la revendication 1, **caractérisé en ce que** ladite deuxième distance est déterminée par la grandeur de la précontrainte agissant élastiquement sur l'induit (38, 38a, 38b, 38c).

3. Dispositif servofrein à dépression selon la revendication 2, **caractérisé en ce qu'**un élément mobile relativement à l'induit (38) est précontraint élastiquement à l'encontre de l'induit (38) de manière qu'il fait saillie par rapport à l'induit (38) en direction de l'aimant permanent (40, 40b) et, dans la position initiale de la soupape de commande (22), n'est pas en contact avec l'aimant permanent (40, 40b), et **en ce que** la précontrainte élastique déterminant ladite deuxième distance agit sur l'induit (38) seulement lorsque l'élément mobile relativement à l'induit (38) est venu, lors de son actionnement, en appui contre l'aimant permanent (40, 40b).

4. Dispositif servofrein à dépression selon la revendication 3, **caractérisé en ce que** l'induit (38) est cylindrique creux et que l'élément mobile relativement à l'induit (38) est un manchon d'écartement (60) disposé de manière concentrique par rapport à l'induit (38).

5. Dispositif servofrein à dépression selon la revendication 1, **caractérisé en ce que** l'aimant permanent (40b, 40c) est précontraint à l'encontre du sens d'actionnement, élastiquement contre une butée (94).

6. Dispositif servofrein à dépression selon l'une des revendications 1 à 5,
**caractérisé en ce que** la butée (94) et/ou la surface de contact (118) coopérant avec la butée (94), associée à l'aimant permanent (40b, 40c), est (sont) bombée(s) et **en ce qu'**un jeu radial existe entre l'aimant permanent (40b, 40c) respectivement son support et le carter (24) de la soupape de commande.

7. Dispositif servofrein à dépression selon l'une des revendications 1 à 6,
**caractérisé en ce qu'**un élément élastique (112) dans son ensemble de forme annulaire, présentant plusieurs segments annulaires élastiques, précontraint l'aimant permanent (40c) à l'encontre du sens d'actionnement.

8. Dispositif servofrein à dépression selon l'une des revendications 1 à 7,
**caractérisé en ce que** la butée (94) est formée par une bague de butée (96) constituée en particulier de matière plastique, s'appuyant dans le carter (24) de la soupape de commande, dont l'étendue axiale détermine ladite première distance.

9. Dispositif servofrein à dépression selon l'une des revendications 1 à 8,
**caractérisé en ce que** l'aimant permanent (40b, 40c) peut être translaté relativement au carter (24) de la soupape de commande, dans le sens d'actionnement, sur une distance qui est supérieure à la course d'actionnement maximale possible de l'élément d'entrée (26) déduction faite de ladite première distance.

10. Dispositif servofrein à dépression selon l'une des revendications 1 à 9,
**caractérisé en ce que** l'induit (38a) et l'aimant permanent (40a) sont, par un élément d'ancrage (72) qui permet à l'induit (38a) de se rapprocher de l'aimant permanent (40a), couplés l'un avec l'autre en une unité translatable et **en ce que** la précontrainte élastique déterminant ladite deuxième distance agit sur l'induit (38a) seulement lorsque l'unité translatable constituée par l'induit (38a) et l'aimant permanent (40a) s'appuie contre une butée (92) qui empêche sa translation dans le sens d'actionnement.

11. Dispositif servofrein à dépression selon la revendication 10,
**caractérisé en ce que** l'unité translatable constituée par l'induit (38a) et l'aimant permanent (40a) est guidée dans un carter (64) de dispositif magnétique, qui est fixé dans le carter (24) de la soupape de commande et fournit la butée (92).

12. Dispositif servofrein à dépression selon la revendication 10 ou 11,
**caractérisé en ce qu'**un premier ressort (88) précontraint l'induit (38a) et l'aimant permanent (40a) à l'écart l'un de l'autre, qu'un deuxième ressort (90) précontraint l'unité translatable constituée par l'induit (38a) et l'aimant permanent (40a) à l'encontre du sens d'actionnement et **en ce que** la force commune des deux ressorts (88, 90) détermine ladite deuxième distance.

13. Dispositif servofrein à dépression selon la revendication 12,
**caractérisé en ce que** le premier ressort (88) est contraint axialement entre l'induit (38a) et l'élément d'ancrage (72).

14. Dispositif servofrein à dépression selon la revendication 12 ou 13,
**caractérisé en ce que** le deuxième ressort (90) s'appuie par l'une de ses extrémités contre la butée (92) et, par son autre extrémité, sur l'induit (38a) et est en particulier disposé de manière coaxiale par rapport au premier ressort (88).

15. Dispositif servofrein à dépression selon l'une des revendications 10 à 14,
**caractérisé en ce que** l'aimant permanent (40a) est logé dans l'élément d'ancrage (72).

16. Dispositif servofrein à dépression selon l'une des revendications 10 à 15,
**caractérisé en ce que** l'induit (38a) est constitué d'une base (86) et d'une plaque magnétique (84) reliée avec celle-ci, tournée vers l'aimant permanent (40a), qui est en particulier de forme annulaire.

17. Dispositif servofrein à dépression selon l'une des revendications précédentes,
**caractérisé en ce que** le premier siège de soupape (50) est couplé solidairement, par l'intermédiaire de l'induit (38, 38a, 38b, 38c), avec l'élément d'entrée (26), dans le sens d'actionnement.

18. Dispositif servofrein à dépression selon l'une des revendications précédentes,
**caractérisé en ce que** le premier siège de soupape (50) est formé sur un prolongement (48) en particulier en forme de manchon, relié solidairement avec l'induit (38, 38a, 38b, 38c).

19. Dispositif servofrein à dépression selon la revendication 18,
**caractérisé en ce qu'**un verrou (30), qui vient dans un évidement (56) du prolongement (48) sur lequel le premier siège de soupape (50) est formé, est relié solidairement avec l'élément d'entrée (26) et **en ce que** le jeu du verrou (30) dans cet évidement (56) est, dans le sens de translation de l'élément d'entrée (26), inférieur à la course d'actionnement maximale possible de l'élément d'entrée (26).

20. Dispositif servofrein à dépression selon l'une des revendications précédentes,
**caractérisé en ce que** l'élément d'entrée (26) est précontraint élastiquement à l'encontre du sens d'actionnement.

21. Dispositif servofrein à dépression selon l'une des revendications précédentes,
**caractérisé en ce que** le déplacement en arrière de l'induit (38, 38a, 38b, 38c) se produisant après son détachement de l'aimant permanent (40, 40a, 40b, 40c), est amorti par un élément en élastomère, en particulier par un joint torique (110).

22. Dispositif servofrein à dépression selon l'une des revendications 1 à 21,
**caractérisé en ce que** ladite première distance entre l'induit (38h, 38i) et l'aimant permanent (40h, 40i) se réduit en fonction d'une force contraire (F) agissant sur le dispositif servofrein à dépression à l'encontre de son sens d'actionnement.

23. Dispositif servofrein à dépression selon la revendication 22,
**caractérisé en ce que** l'aimant permanent (40h, 40i) est relié avec un manchon d'ajustage (146, 146') sur lequel la force contraire (F) agit.

24. Dispositif servofrein à dépression selon la revendication 23,
**caractérisé en ce que** le manchon d'ajustage (146') est relié solidairement avec l'aimant permanent (40i).

25. Dispositif servofrein à dépression selon la revendication 24,
**caractérisé en ce que** le manchon d'ajustage (146') présente une butée (154') qui coopère avec le carter (24) de la soupape de commande (22) et limite la réduction de ladite première distance.

26. Dispositif servofrein à dépression selon la revendication 25,
**caractérisé en ce qu'**un manchon de rétroaction (160) transmet la force contraire (F) au manchon d'ajustage (146').

27. Dispositif servofrein à dépression selon la revendication 23 ou 24,
**caractérisé en ce que** le manchon d'ajustage (146) s'appuie, dans le sens contraire à l'actionnement, par l'intermédiaire d'un élément (152) élastiquement flexible, sur le carter (24) de la soupape de commande (22).

28. Dispositif servofrein à dépression selon l'une des revendications 23 à 25,
**caractérisé en ce qu'**une butée (collet annulaire 154), contre laquelle l'aimant permanent (40h) est précontraint élastiquement à l'encontre du sens d'actionnement, est formée sur le manchon d'ajustage (146).

29. Dispositif servofrein à dépression selon l'une des revendications 23 à 25 ou 27,
**caractérisé en ce qu'**une rondelle de réaction (144) constituée de matière élastomère, transmet la force contraire (F) au manchon d'ajustage (146).

30. Dispositif servofrein à dépression selon l'une des revendications 1 à 29,
**caractérisé en ce qu'**un dispositif de levier (130) agissant sur l'aimant permanent (40g) réduit ladite première distance entre l'induit (38g) et l'aimant permanent (40g), lors d'un actionnement de la soupape de commande (22), sans passer en dessous de ladite deuxième distance entre l'induit (38g) et l'aimant permanent (40g).

31. Dispositif servofrein à dépression selon la revendication 30,
**caractérisé en ce que** l'aimant permanent (40g) est précontraint élastiquement en appui avec le dispositif de levier (130).

32. Dispositif servofrein à dépression selon la revendication 30 ou 31,
**caractérisé en ce que** l'aimant permanent (40g) est, lors d'un actionnement de la soupape de commande (22), poussé par le dispositif de levier (130) contre la butée (94).

33. Dispositif servofrein à dépression selon l'une des revendications 30 à 32,
**caractérisé en ce que** le dispositif de levier (130) s'appuie d'une part sur le poussoir de sortie de force (36) et d'autre part sur l'aimant permanent (40g) et **en ce que** le carter (24) de la soupape de commande forme un point de rotation (P) pour le dispositif de levier (130).

34. Dispositif servofrein à dépression selon la revendication 33,
**caractérisé en ce que** le dispositif de levier (130) est un élément (132) dans son ensemble de forme annulaire, composé de plusieurs bras (134) présentant respectivement une section en forme de U et s'étendant radialement, dont les bras (134) sont reliés les uns aux autres radialement vers l'intérieur.
